# FASCICULE DE BREVET EUROPEEN

(11) **EP 3 985 278 B1**
(45) Date de publication et mention de la délivrance du brevet: **25.10.2023**
(21) Numéro de dépôt: 21212877.1
(22) Date de dépôt: 23.04.2020
(51) Int. Cl.: F16F 7/104, E04B 1/84, E04B 1/82, E04B 1/86, E04B 1/99, F16F 7/108, G10K 11/04, G10K 11/172

(54) **ELÉMENT DE CONSTRUCTION À ABSORBEURS DE RÉSONANCE**
BAUELEMENT MIT RESONANZABSORBER
CONSTRUCTION ELEMENT WITH RESONANCE ABSORBERS

(30) Priorité: 25.04.2019 FR 1904356; 25.04.2019 FR 1904359
(43) Date de publication de la demande: 20.04.2022
(62) Demande divisionnaire de: 20171211.4
(73) Titulaire: SAINT-GOBAIN PLACO, 92400 Courbevoie (FR)
(72) Inventeur: SOURCIS, Benjamin, 75012 PARIS (FR); LEROY, Pierre, 60370 Saint Felix (FR)
(74) Mandataire: Ex Materia

(56) Documents cités:
- DE-A1-102010 038 720
- FR-A1- 2 581 106
- FR-A1- 3 027 082
- US-A- 5 629 503
- US-A1- 2015 114 751

## Description

Le domaine de la présente invention est celui des éléments de construction destinés à séparer des espaces, tels que des parois de construction, simples ou doubles, et des éléments de construction comprenant au moins une telle paroi, ces éléments de construction ayant vocation à assurer une isolation acoustique.

L'isolation acoustique entre deux pièces séparées par une paroi est typiquement assurée soit grâce à l'augmentation de la masse surfacique de la paroi, soit grâce au doublage de cette paroi. Dans le cas de cloisons à double parois, ces cloisons vibrent et se comportent en basses fréquences comme un système masse-ressort-masse où la lame d'air joue le rôle du ressort couplant les deux plaques entre elles. Pour les basses fréquences, c'est-à-dire des fréquences comprises entre 50 Hz et 150 Hz, on parle de fréquence de « respiration » qui correspond à un déplacement en opposition de phases des plaques constituant la cloison. Une double parois de type 72/48 a une fréquence de respiration avoisinant les 110Hz, une double parois de type 120/70 a une fréquence de respiration avoisinant les 63Hz.

Il est connu de fixer à la paroi un absorbeur dynamique apte à atténuer la fréquence de respiration. L'efficacité d'amortissement ou d'absorption de ces vibrations de la paroi par l'absorbeur dynamique dépend de l'adéquation entre la fréquence de résonance de l'absorbeur dynamique et la fréquence de respiration qui caractérise la paroi. La fréquence de respiration de la paroi varie en fonction de la surface massique de la paroi, et, lorsqu'il s'agit d'une double parois, de la distance entre les deux parois. Le choix de l'absorbeur dynamique, dépend ainsi des fréquences propres à la structure à amortir.

Le document FR3027082A1 divulgue un absorbeur dynamique fixé sur une plaque qui joue un rôle de paroi. Un tel absorbeur dynamique comprend une lame, une masse et un dispositif de fixation permettant d'attacher l'absorbeur dynamique sur la paroi. Un tel absorbeur dynamique réduit la transparence acoustique des parois dans le domaine des basses fréquences par pompage énergétique. Cependant, un tel absorbeur dynamique est dédié à un type de paroi, et n'est efficace que pour ce type de paroi. Il est nécessaire d'utiliser différents types d'absorbeurs dynamiques lorsque les parois sont de nature différente. Le document US2015114751 divulgue un treillis comportant des absorbeurs dynamiques, prêt à poser sur une cloison murale. Le document FR2581106 décrit une structure murale comportant une surface métallique incluant une cavité de résonance.

### Premier aspect de l'invention

Le but de la présente invention est donc de résoudre au moins l'inconvénient décrit ci-dessus en concevant un absorbeur polyvalent, pouvant être installé sur différents types de parois. Un tel absorbeur est apte à être accordé sur la fréquence de respiration à éliminer.

L'invention concerne un absorbeur de résonance pour une paroi de construction, l'absorbeur de résonance comprenant au moins une lame ayant une première extrémité longitudinale opposée à une deuxième extrémité longitudinale, un support qui comprend un premier moyen de fixation apte à coopérer avec la première extrémité longitudinale de la lame et un deuxième moyen de fixation apte à coopérer avec la deuxième extrémité longitudinale de la lame, l'absorbeur comprenant au moins une masse portée par la lame entre le premier moyen de fixation et le deuxième moyen de fixation, le support étant destiné à être fixé à la paroi de construction, caractérisé en ce que le support est configuré pour adopter alternativement au moins une première position d'utilisation par rapport à la lame dans laquelle l'absorbeur de résonance présente une première fréquence de résonance et une deuxième position d'utilisation par rapport à la lame dans laquelle l'absorbeur de résonance présente une deuxième fréquence de résonance.

La première fréquence de résonance et la deuxième fréquence de résonance sont distinctes et par exemple séparées d'une valeur égale à 5Hz, 10Hz, 15Hz ou un multiple de ces valeurs. Par exemple, la première fréquence de résonance est égale à 50Hz et la deuxième fréquence de résonance est égale à 100Hz.

L'absorbeur de résonance est ainsi apte à être accordé à la fréquence de résonance voulue. Le fait que l'absorbeur de résonance soit configuré pour alternativement présenter au moins une première fréquence de résonance et une deuxième fréquence de résonance, distincte de la première fréquence de résonance, rend adaptable l'absorbeur de résonance à différents types de paroi. L'absorbeur de résonance, rendu polyvalent, est ainsi standardisé.

La lame s'étend selon un axe longitudinal entre sa première extrémité longitudinale et sa deuxième extrémité longitudinale. La lame comprend une partie intermédiaire entre sa première extrémité et sa deuxième extrémité. C'est la partie intermédiaire qui porte la masse.

La lame est apte à osciller dans la première position d'utilisation et dans la deuxième position d'utilisation, ces deux positions d'utilisation étant distinctes. La lame se comporte comme un ressort couplant la masse au support. La lame est constituée d'un matériau élastique et rigide. Par exemple, la lame est en bois ou en un matériau synthétique.

La masse portée par la lame est par exemple dans un matériau identique à la lame. Par exemple la masse est métallique.

La lame et la masse sont aptes à osciller conjointement autour d'au moins une position d'équilibre. Dans un exemple de réalisation, la masse et la lame sont deux éléments distincts qui sont solidarisés l'un à l'autre. Par exemple, la masse est vissée sur la lame. Dans un autre exemple de réalisation, la lame et la masse forment un ensemble monobloc, en ce sens que la lame et la masse ne peuvent être dissociées sans que ne soit porté atteinte à l'intégrité de l'une ou l'autre de ces pièces.

La lame et le support sont deux éléments distincts. Ils coopèrent ensemble, la première extrémité longitudinale coopérant avec le premier moyen de fixation d'une part, et la deuxième extrémité longitudinale coopérant avec le deuxième moyen de fixation d'autre part. Par coopérer, on entend que la lame et le support interagissent, directement ou indirectement. Le support est apte à fixer les extrémités longitudinales de la lame pour adopter soit la première position d'utilisation, soit la deuxième position d'utilisation.

La première fréquence de résonance est apte à contrer des fréquences de respiration d'un premier spectre de fréquences de respiration la paroi de construction. La deuxième fréquence de résonance est apte à contrer des fréquences de respiration d'un deuxième spectre de fréquences de respiration de la paroi de construction, le premier spectre de fréquences de respiration étant distinct du deuxième spectre de fréquences de respiration.

L'absorbeur de résonance, lorsque mis en oeuvre, adopte soit la première position d'utilisation, soit la deuxième position d'utilisation. L'invention vise à la fois l'absorbeur de résonance assemblé, tel qu'on peut le trouver lorsqu'il est solidarisé à la paroi de construction, ou tel qu'on peut le trouver avant qu'il soit solidarisé, par exemple sur un chantier de construction ou chez un fournisseur de matériel de construction. L'invention vise également l'absorbeur de résonance en pièces détachées, par exemple sous forme de kit destiné à être monté. L'absorbeur de résonance objet de l'invention comprend ainsi un support coopérant avec la lame, ou ledit support dissocié de la lame.

Selon un aspect de l'invention, au moins le premier moyen de fixation et/ou le deuxième moyen de fixation sont configurés pour adopter au moins les deux positions d'utilisation distinctes sur la lame. Le premier moyen de fixation et/ou le deuxième moyen de fixation sont configurés pour adopter alternativement la première position d'utilisation, pour que l'absorbeur de résonance soit à la première fréquence, et la deuxième position d'utilisation, pour que l'absorbeur de résonance soit à la deuxième fréquence. Le premier moyen de fixation et/ou le deuxième moyen de fixation peuvent être déplacés longitudinalement sur la lame de sorte à adopter l'une ou l'autre position d'utilisation.

La portion intermédiaire de la lame comprend une partie utile apte à osciller avec la masse. La partie utile apte à osciller est caractérisée par une dimension longitudinale qui est variable. La dimension longitudinale de cette partie utile oscillante est différente lorsque l'absorbeur de résonance est dans la première position d'utilisation ou dans la deuxième position d'utilisation.

Selon un aspect de l'invention, la masse est disposée de façon centrée entre le premier moyen de fixation et le deuxième moyen de fixation. Par « centré » on entend que, lors de la mise en oeuvre de l'invention, la masse est disposée à équidistance entre le premier moyen de fixation et le deuxième moyen de fixation. Avantageusement, la masse a un centre de gravité qui est coaxial avec un centre de la partie utile apte à osciller.

Selon un aspect de l'invention, la première extrémité longitudinale de la lame et la deuxième extrémité longitudinale de la lame sont configurées pour coulisser par rapport au support. La première extrémité longitudinale de la lame et la deuxième extrémité longitudinale de la lame sont ainsi aptes à glisser dans le support, c'est-à-dire dans le premier moyen de fixation et/ou dans le deuxième moyen de fixation, respectivement. Lame et support sont montés coulissant de sorte à pouvoir passer de la première position d'utilisation à la deuxième position d'utilisation de manière simple. Leur montage est coulissant selon l'axe longitudinal de la lame. Avantageusement, lors de la mise en oeuvre de l'absorbeur de résonance, le montage coulissant est rendu inopérant. Ainsi, lors de la mise en oeuvre de l'absorbeur de résonance, ce dernier est soit dans la première position d'utilisation, soit dans la deuxième position d'utilisation.

Selon un aspect de l'invention, la lame comprend au moins un repère de position de l'un des moyens de fixation permettant d'adopter l'une des positions d'utilisation. Le repère de position permet de dimensionner longitudinalement la partie utile apte à osciller. Il est utilisé lors du montage de la lame sur le support, par exemple au moment du montage de l'absorbeur de résonance sur la paroi de construction. Le repère de position est visible par l'utilisateur qui réalise le montage de la lame dans le support. Par exemple, le repère de position est positionné sur l'une des faces de la lame. Le repère de position est destiné à être positionné face à une partie du support, par exemple au niveau d'une tranche de l'un des moyens de fixation.

Selon un aspect de l'invention, l'absorbeur de résonance comprend au moins le repère de position, dit premier repère de position, sur la lame du côté de la première extrémité longitudinale de la lame et au moins un deuxième repère de position, différent du premier repère de position, sur la lame du côté de la deuxième extrémité longitudinale de la lame, le premier repère de position et le deuxième repère de position permettant d'adopter l'une des positions d'utilisation. Le premier repère de position et le deuxième repère de position sont destinés à être positionnés face à deux parties distinctes du support, par exemple au niveau d'une tranche du premier moyen de fixation et d'une tranche du deuxième moyen de fixation, respectivement. Grâce au premier repère de position et au deuxième repère de position, le positionnement de la lame est coordonné de part et d'autre de la masse et la masse reste centrée. Le premier repère de position et le deuxième repère de position sont dédiés au dimensionnement de l'absorbeur de résonance. Le premier repère de position et le deuxième repère de position permettent de dimensionner la partie utile apte à osciller. Le premier repère de position et le deuxième repère de position sont par exemple équidistants par rapport au centre de gravité de la masse.

Selon un aspect de l'invention, le repère de position est un marquage visuel ménagé sur la lame. On comprend par « marquage visuel » le fait que le repère de position correspond au moins à une rainure ou un symbole ou un signe visible par l'installateur. Par exemple, le repère de position est au moins un trait plein ou un trait discontinu, ou au moins une indication associée à un type de cloison déterminé, ou au moins une rainure. Ce marquage visuel nécessite un ajustement manuel pour que la lame soit arrêtée sur ledit repère de position. Par exemple, le repère de position associe l'indication « 72/48 » ou « 120/70 », désignant un type de cloison, à un trait signifiant à quel endroit doit coïncider la tranche du moyen de fixation. Le premier chiffre de l'indication « 72/48 » illustre l'épaisseur de la cloison, parois comprises, tandis que le deuxième chiffre de cette indication illustre l'épaisseur de l'espace interne de cette cloison ménagé entre ces parois. Les indications ci-dessus illustrent des exemples de cloisons donnés de manière non-limitative.

Selon un aspect de l'invention, la lame comprend au moins le repère de position de l'un des moyens de fixation permettant d'adopter la première position d'utilisation et une marque de position de l'un des moyens de fixation permettant d'adopter la deuxième position d'utilisation. La marque de position, comme le repère de position, permet de dimensionner longitudinalement la partie utile apte à osciller. C'est un marquage visuel tel que précédemment décrit. Par exemple, sur la lame, le repère de position associe l'indication « 72/48 » à un premier trait permettant de positionner la lame dans sa première position d'utilisation et la marque de position associe l'indication « 120/70 », à un deuxième trait permettant de positionner la lame dans sa deuxième position d'utilisation.

Selon un aspect de l'invention, la lame comprend au moins la marque de position, dite première marque de position, du côté de la première extrémité longitudinale de la lame et au moins une deuxième marque de position, différente de la première marque de position, sur la lame du côté de la deuxième extrémité longitudinale de la lame, la première marque de position et la deuxième marque de position permettant d'adopter la deuxième position d'utilisation.

Selon un aspect alternatif de l'invention, le support comprend un organe de butée, le support adoptant la première position d'oscillation lorsque la première extrémité longitudinale de la lame et la deuxième extrémité longitudinale de la lame sont toutes deux en butée de l'organe de butée.

Selon un aspect de l'invention, l'absorbeur de résonance est caractérisé en ce qu'il présente un taux d'amortissement défini par une formule telle que taux d'amortissement = c / (2√ KM)+/- 1%. Le taux d'amortissement correspond à la capacité qu'à l'absorbeur de résonance à disperser l'énergie. Dans la formule, « c » est un coefficient d'amortissement, « K » correspond à un ressort de raideur et « M » est la masse de l'absorbeur de résonance.

Selon un aspect de l'invention, l'absorbeur de résonance comprend au moins un moyen de blocage permettant de bloquer le premier moyen de fixation et/ou le deuxième moyen de fixation par rapport à la lame dans la première position d'utilisation ou deuxième position d'utilisation. La partie utile apte à osciller est définie lors du montage de l'absorbeur de résonance. Lors de la mise en oeuvre de l'absorbeur de résonance, la partie utile apte à osciller est invariable, en ce sens que la lame est bloquée sur le support et n'est plus ajustable. Le moyen de blocage solidarise le premier moyen de fixation et/ou le deuxième moyen de fixation avec la lame. On comprend ainsi que, lorsque l'absorbeur de résonance est en pièces détachées ou lorsque la partie utile apte à osciller est en cours de définition, le moyen de blocage est inopérant. Lorsque le moyen de blocage exerce sa fonction de blocage de la lame par rapport au support, l'absorbeur de résonance est soit en première position d'utilisation soit en deuxième position d'utilisation.

Par exemple, le moyen de blocage opère un serrage du premier moyen de fixation et/ou du deuxième moyen de fixation contre la lame. Par exemple, le moyen de blocage est au moins un rivet ou un boulon, assurant la liaison lame/support en les traversant.

Avantageusement, le moyen de blocage comprend un premier élément de blocage dédié à bloquer la première extrémité longitudinale et le premier moyen de fixation, le moyen de blocage comprenant un deuxième élément de blocage dédié à bloquer la deuxième extrémité longitudinale et le deuxième moyen de fixation.

Selon un aspect de l'invention, la masse a un poids compris entre 50 g et 1000 g, par exemple 500 g. De manière avantageuse, le poids de la masse peut être plus spécifiquement compris entre 300 g et 700 g, ou entre 400 g et 600 g.

L'invention concerne également un élément de construction comprenant au moins une paroi de construction en un matériau rigide et au moins un absorbeur de résonance tel que précédemment décrit.

La paroi de construction est destinée à assurer la séparation de deux espaces. La paroi de construction est par exemple un élément d'un plafond suspendu, une dalle de plancher, une paroi d'une cloison verticale simple ou double, ou un élément de doublage. Avantageusement, la paroi de construction fait partie d'une cloison à double parois qui comprend deux parois de construction parallèles l'une à l'autre et séparées par un espace intermédiaire. L'espace intermédiaire contient par exemple de l'air, ou est au moins partiellement rempli par un matériau d'isolation, que ce soit un élément d'isolation acoustique ou thermique. Comme élément d'isolation acoustique, on peut citer en exemple un matelas de laine minérale, par exemple de la laine de verre ou de la laine de roche, ou encore une mousse élastique.

La paroi de construction est faite d'au moins un matériau rigide choisi parmi le verre, le béton, les métaux, le plâtre, les matières plastiques, le bois ou les matériaux composite. Avantageusement, la paroi de construction comprend au moins du plâtre, par exemple une plaque de plâtre.

L'élément de construction peut comprendre un ou plusieurs absorbeurs de résonance. Lorsque le ou les absorbeurs de résonance sont fixés sur une cloison à double parois, les absorbeurs de résonance sont disposés dans l'espace intermédiaire, autrement dit sur au moins l'une des faces des plaques de construction tournée vers l'espace intermédiaire.

### Deuxième aspect de l'invention

Les parois pour lesquelles on souhaite réduire la transparence acoustique sont équipées d'une pluralité d'absorbeurs dynamiques. Rendre optimal le nombre d'absorbeurs dynamiques est une problématique essentielle des concepteurs d'éléments de constructions destinés à assurer une bonne isolation acoustique.

Les éléments de constructions actuels intégrant de tels absorbeurs dynamiques méritent d'être optimisés. Il est en effet important que la proportion d'absorbeurs dynamiques par paroi soit ajustée, d'une part pour réduire efficacement la fréquence de respiration et également pour optimiser les coûts engendrés par l'ajout d'absorbeurs dynamiques à la paroi.

Le but de la présente invention selon son deuxième aspect est donc de résoudre les inconvénients décrits ci-dessus en concevant un élément de construction doté d'un nombre adéquat d'absorbeurs de résonances, sans que ce nombre soit surévalué afin de minimiser les coûts relatifs à un tel équipement, ou sous-évalué ce qui nuirait à l'isolation acoustique par ledit élément de construction.

Selon ce deuxième aspect, l'invention concerne aussi un élément de construction comprenant au moins une paroi de construction et une pluralité d'absorbeurs de résonance comprenant chacun au moins une lame, un support et un poids, la lame incluant une portion intermédiaire apte à osciller autour d'une position d'équilibre, le support étant configuré pour maintenir la lame et le support est solidarisé sur la paroi de construction, le poids étant porté par la portion intermédiaire de la lame, caractérisé en ce qu'une masse de la pluralité d'absorbeurs de résonance représente 2 à 25% d'une masse totale de l'élément de construction. Ceci permet de s'assurer d'un bon rapport coût économique /performance d'isolation acoustique.

Selon un exemple, la masse de la pluralité d'absorbeurs de résonance représente 5 à 15% d'une masse totale de l'élément de construction.

De manière plus limitative, la masse de la pluralité d'absorbeurs de résonance représente 10% d'une masse totale de l'élément de construction.

La masse totale de l'élément de construction inclut la masse de la pluralité d'absorbeurs de résonance et une masse de la paroi de construction. La masse de la pluralité d'absorbeurs de résonance de 2 à 25% correspond à l'inclusion massique de la pluralité d'absorbeurs de résonance dans l'élément de construction. Une telle masse de la pluralité d'absorbeurs de résonance assure une réduction, voire une suppression, d'une transparence acoustique de la paroi de construction aux basses fréquences, c'est-à-dire des fréquences comprises entre 50 Hz et 150 Hz.

Pour une cloison 72/48, la masse de l'élément de construction ramenée au m² de surface est égale à 17,5kg. En supposant que le poids de l'absorbeur de résonance est égal à 50g et pour une inclusion massique égale à 2%, le nombre d'absorbeur de résonance au m² est égal à 7. Dans ces mêmes conditions et pour un poids de l'absorbeur de résonance est égal à 1000g, le nombre d'absorbeur de résonance au m² est égal à 0,35.

Toujours pour cette cloison 72/48 et en supposant que le poids de l'absorbeur de résonance est égal à 50g, pour une inclusion massique égale à 25%, le nombre d'absorbeur de résonance au m² est égal à 87,5. Dans ces mêmes conditions et pour un poids de l'absorbeur de résonance est égal à 1000g, le nombre d'absorbeur de résonance au m² est égal à 4,37.

Pour une cloison 120/70, la masse de l'élément de construction ramenée au m² de surface est égale à 35kg. En supposant que le poids de l'absorbeur de résonance est égal à 50g et pour une inclusion massique égale à 2%, le nombre d'absorbeur de résonance au m² est égal à 14. Dans ces mêmes conditions et pour un poids de l'absorbeur de résonance est égal à 1000g, le nombre d'absorbeur de résonance au m² est égal à 0,7.

Toujours pour cette cloison 120/70 et en supposant que le poids de l'absorbeur de résonance est égal à 50g, pour une inclusion massique égale à 25%, le nombre d'absorbeur de résonance au m² est égal à 175. Dans ces mêmes conditions et pour un poids de l'absorbeur de résonance est égal à 1000g, le nombre d'absorbeur de résonance au m² est égal à 8,75.

Selon un exemple plus précis, une inclusion massique égale à 10% permet de réduite la transparence acoustique de 3 à 4 décibels pour une cloison 120/70. Une telle inclusion correspond à 7 absorbeurs de résonance par m², tous accrochés à une même paroi, ou 3,5 absorbeurs de résonance par m² répartis sur deux parois placées en vis-à-vis.

Le premier chiffre de l'indication « 72/48 » ou « 120/70 » illustre l'épaisseur de la cloison, parois comprises, tandis que le deuxième chiffre de cette indication illustre l'épaisseur de l'espace interne de cette cloison ménagé entre ces parois. Les indications ci-dessus illustrent des exemples de cloisons donnés de manière non-limitative.

La paroi de construction est destinée à assurer la séparation de deux espaces. La paroi de construction est par exemple un élément d'un plafond suspendu, une dalle de plancher, une paroi d'une cloison verticale simple ou double, un élément de doublage. La paroi de construction est faite d'au moins un matériau rigide choisi parmi le verre, le béton, les métaux, le plâtre, les matières plastiques, le bois ou les matériaux composite. Avantageusement, la paroi de construction comprend au moins du plâtre, par exemple une plaque de plâtre.

La pluralité d'absorbeurs de résonance peut comprendre au moins deux absorbeurs de résonance fixés sur la paroi de construction. Le nombre d'absorbeur de résonance est fonction d'une masse unitaire de chaque absorbeur de résonance, et du rapport entre la masse de la pluralité d'absorbeurs de résonance et la masse totale de l'élément de construction, compris entre 2 et 25%. Selon le type d'absorbeur de résonance employé, leur nombre peut varier pour un même rapport.

La lame de l'absorbeur de résonance présente une première extrémité opposée à une deuxième extrémité. La lame s'étend majoritairement selon un axe d'extension entre sa première extrémité et sa deuxième extrémité. La première extrémité et la deuxième extrémité sont fixes lorsqu'elles sont bloquées avec le support.

La portion intermédiaire est située entre la première extrémité et la deuxième extrémité de la lame. La lame se comporte comme un ressort couplant le poids au support. La lame est constituée d'un matériau élastique et rigide. Par exemple, la lame est en bois ou en un matériau synthétique.

Le support de l'absorbeur de résonance comprend un premier moyen de fixation qui coopère avec la première extrémité de la lame pour la maintenir et un deuxième moyen de fixation qui coopère avec la deuxième extrémité de la lame pour la maintenir. Le support est par ailleurs fixé à la paroi de construction dans l'élément de construction.

La lame et le support sont deux éléments distincts. Ils coopèrent ensemble, la première extrémité coopérant avec le premier moyen de fixation d'une part, et la deuxième extrémité coopérant avec le deuxième moyen de fixation d'autre part. Par coopérer, on entend que la lame et le support interagissent, par exemple par coulissement, et peuvent être bloqué l'un par rapport à l'autre.

Le poids de l'absorbeur de résonance est porté par la lame entre le premier moyen de fixation et le deuxième moyen de fixation. Le poids est par exemple dans un matériau métallique.

La lame et le poids sont aptes à osciller conjointement autour d'une position d'équilibre. La position d'équilibre est la position dans laquelle la lame et le poids sont au repos. L'oscillation a lieu lorsque l'absorbeur de résonance est soumis aux vibrations de la paroi de construction, par exemple lorsque soumis aux basses fréquences évoquées plus haut.

Dans un exemple de réalisation, le poids et la lame sont deux éléments distincts qui sont solidarisés l'un à l'autre. Par exemple, le poids est vissé ou collé sur la lame. Dans un autre exemple de réalisation, la lame et le poids forment un ensemble monobloc, en ce sens que la lame et le poids ne peuvent être dissociés sans qu'il ne soit porté atteinte à l'intégrité de la lame ou du poids.

Selon un aspect de l'invention, l'élément de construction comprend deux parois de construction parallèles l'une à l'autre et séparées par un espace intermédiaire, la pluralité d'absorbeurs de résonance étant située dans l'espace intermédiaire. L'élément de construction est à double parois, avantageusement deux parois de construction faite de mêmes matériaux. Les deux parois de construction sont parallèles l'une à l'autre et séparées par l'espace intermédiaire qui est inclus dans l'élément de construction. L'espace intermédiaire contient par exemple de l'air, ou est au moins partiellement rempli par un matériau d'isolation, cet élément d'isolation ayant au moins des propriétés d'isolation acoustique, pouvant également avoir d'autres propriétés, comme des propriétés d'isolation thermique. Comme élément d'isolation, on peut citer en exemple un matelas de laine minérale, de verre ou une mousse.

Lorsque les absorbeurs de résonance sont fixés sur un élément de construction à double parois, les absorbeurs de résonance sont disposés dans l'espace intermédiaire, autrement dit sur au moins l'une des faces des plaques de construction tournée vers l'espace intermédiaire. Cette disposition a un avantage esthétique puisqu'elle permet de masquer les absorbeurs de résonance du point de vue des pièces que l'élément de construction sépare.

Selon un aspect de l'invention, chacune des deux parois de construction comprend une face interne opposée à une face externe, la face interne des deux parois de constructions étant orientée vers l'espace intermédiaire, la pluralité d'absorbeurs de résonance étant fixée à la face interne de l'une et/ou de l'autre des parois de construction. La pluralité d'absorbeurs de résonance est ainsi soit répartie sur chaque paroi de construction, soit située sur l'une ou l'autre des parois de construction.

Selon un aspect de l'invention, les absorbeurs de résonance de la pluralité d'absorbeurs de résonance sont répartis de façon régulière sur la face interne de l'une et/ou l'autre paroi de construction. Par régulier, on entend que les absorbeurs de résonance ont une répartition uniforme. Par exemple, les absorbeurs de résonance sont équidistants les uns des autres. La répartition régulière permet d'absorber de façon égale les vibrations qui animent la paroi de construction, et ce sur toute son étendue.

Selon un aspect de l'invention, la paroi de construction comprend une région périphérique et une région centrale, la pluralité d'absorbeurs de résonance étant solidarisée sur la région centrale de la paroi de construction. Lorsque l'élément de construction comprend une unique paroi de construction, la pluralité d'absorbeurs de résonance se trouve fixée à la région centrale de ladite paroi de construction. Lorsque l'élément de construction comprend une double parois, la pluralité d'absorbeurs de résonance se trouve, dans un exemple de réalisation, fixée à la région centrale de l'une des parois de construction. Dans un autre exemple de réalisation, lorsque l'élément de construction comprend la double parois, la pluralité d'absorbeurs de résonance se trouve répartie sur les deux parois de construction au niveau de leur région centrale respective.

Selon un aspect de l'invention, au moins un absorbeur de résonance de la pluralité d'absorbeurs de résonance étend sa lame horizontalement ou verticalement. On entend par « horizontalement » ou « verticalement » le fait que la lame s'étende sensiblement dans l'une ou l'autre de ces directions. L'horizontalité et la verticalité de la lame sont à apprécier lorsque l'élément de construction est en position d'utilisation. Avantageusement, tous les absorbeurs de résonance de la pluralité d'absorbeurs de résonance étendent leurs lames horizontalement ou verticalement. Alternativement, des absorbeurs de résonance de la pluralité d'absorbeurs de résonance étendent leurs lames horizontalement, et d'autres absorbeurs de résonance de la pluralité des absorbeurs de résonance étendent leurs lames verticalement.

Selon un aspect de l'invention, l'élément de construction comprend une ossature, l'ossature comprenant au moins un premier rail s'étendant selon un premier axe de l'ossature et un deuxième rail s'étendant dans un deuxième axe de l'ossature différent du premier axe, au moins un absorbeur de résonance de la pluralité d'absorbeurs de résonance étendant sa lame parallèlement au premier axe ou au deuxième axe. L'ossature à vocation à former un squelette de maintien mécanique de l'élément de construction. La paroi de construction est au moins maintenue par le premier rail et le deuxième rail qui forment deux zones d'appui et de fixation de la paroi de construction. La paroi de construction et l'ossature coopèrent au niveau de la région périphérique de la paroi de construction. Par exemple, la paroi de construction est fixée au premier rail et au deuxième rail par au moins un moyen de solidarisation, avantageusement par une pluralité de moyens de solidarisation, tels des clous, de vis ou d'agrafes. La masse totale de l'élément de construction telle que précédemment décrite n'inclue pas une masse de l'ossature.

Dans un exemple de réalisation, le premier rail et le deuxième rail sont orthogonaux l'un à l'autre. L'ossature comprend un troisième rail, opposé au premier rail. Lorsque la face interne et la face externe de la paroi de construction sont rectangulaires, parallèle au premier axe et un quatrième rail, opposé au deuxième rail et parallèle au deuxième axe. Ainsi, la paroi de construction est encadrée par l'ossature au moyen des quatre rails.

Par exemple, le premier rail solidarise la paroi de construction avec un plafond. Par exemple, le troisième rail solidarise la paroi de construction avec un sol. Par exemple, le deuxième rail relie le premier rail et le troisième rail et solidarise la paroi de construction latéralement avec l'ossature entre le plafond et le sol. Par exemple, le quatrième rail relie le premier rail et le troisième rail et solidarise la paroi de construction latéralement avec l'ossature entre le plafond et le sol.

Par exemple, l'ossature peut être réalisée en bois, ou en un matériau métallique, ou en tout autre matériau connu compatible avec l'invention. Il va de soi que toute construction avec une simple forme de montants ou de tasseaux, en bois par exemple, convient également, ainsi qu'une ossature faite d'appuis ou de suspentes ponctuelles.

Selon un aspect de l'invention, les absorbeurs de résonance de la pluralité d'absorbeurs de résonance étendent leurs lames parallèlement au premier axe de l'ossature ou au deuxième axe de l'ossature. La lame d'au moins une partie des absorbeurs de résonance étend son axe d'extension parallèlement au premier axe ou au deuxième axe. Avantageusement, toutes les lames de la pluralité d'absorbeurs de résonance ont leurs axes longitudinaux parallèles.

Selon un aspect alternatif de l'invention, dans un premier groupe d'absorbeurs de résonance de la pluralité d'absorbeurs de résonance, les lames s'étend parallèlement au premier axe et dans un deuxième groupe d'absorbeurs de résonance les lames s'étendent parallèlement au deuxième axe.

Selon un aspect de l'invention, au moins une partie des absorbeurs de résonance de la pluralité d'absorbeurs de résonance sont répartis en quinconce sur la même paroi de construction. Ces absorbeurs de résonance sont répartis en quinconce dans un plan d'extension majoritaire de la paroi de construction. Le plan d'extension majoritaire de la paroi de construction est le plan dans lequel il étend sa plus grande dimension. Notamment, le plan d'extension majoritaire passe entre la face interne et la face externe de la paroi de construction est parallèle à ce plan d'extension.

La répartition en quinconce est appréciée par rapport à la position du poids de chaque absorbeur de résonance. Lorsque disposés en quinconce, les absorbeurs de résonance sont alternativement situés le long d'au moins deux lignes distinctes. Avantageusement, ces lignes sont parallèles à l'un ou l'autre des axes de l'ossature.

Selon un aspect de l'invention, l'élément de construction comprend une première paroi de construction et une deuxième paroi de construction, au moins trois absorbeurs de résonance de la pluralité d'absorbeurs de résonance sont répartis alternativement sur la première paroi de construction et la deuxième paroi de construction. Les absorbeurs de résonance de la pluralité d'absorbeurs de résonance sont disposés en alternance sur l'une et l'autre des faces internes dans un plan perpendiculaire au plan d'extension majoritaire. Alors, les absorbeurs de résonance de la pluralité d'absorbeurs de résonance sont décalés les uns par rapport aux autres.

Selon un aspect de l'invention, Les absorbeurs de résonance de la pluralité d'absorbeurs de résonance sont disposés en face à face, dans un plan perpendiculaire au plan d'extension majoritaire de la paroi de construction.

Selon un aspect de l'invention, au moins une partie des absorbeurs de résonance de la pluralité d'absorbeurs de résonance est répartie de façon régulière le long de lignes formées par l'intersection entre des plans transverses équidistants les uns par rapport aux autres et l'une et/ou l'autre face interne de l'une et/ou l'autre des parois de construction. Les plans transverses sont transverses en ce sens qu'ils sont perpendiculaires à au plan d'extension majoritaire de l'élément de construction. La répartition en quiconque est faite sur les deux parois de construction, de façon régulière, à la fois dans le plan transverse et/ou dans les deux plans des faces internes des parois de construction.

Selon un aspect de l'invention, la paroi de construction comprend un premier marquage de position pour indiquer une position d'un moyen de solidarisation reliant la paroi de construction à une ossature et un deuxième marquage de position distinct du premier marquage de position, le deuxième marquage de position permettant de positionner l'absorbeur de résonance sur la paroi de construction. L'ossature est celle précitée.

La paroi de construction est fixée à l'ossature grâce à au moins un moyen de solidarisation. Avantageusement, la paroi de construction est fixée à l'ossature grâce à au moins une pluralité de moyens de solidarisation, tels des clous, des vis ou des agrafes. Le premier marquage de position permet de positionner le moyen de solidarisation en une position adéquate sur la paroi, plus particulièrement au moment où la paroi de construction est solidarisée à l'ossature à l'aide du moyen de solidarisation.

Dans l'élément de construction selon l'invention, le support de l'absorbeur de résonance est fixé à la paroi de construction. Au moment où l'absorbeur de résonance est solidarisé avec la paroi de construction, l'absorbeur de résonance est positionné sur le deuxième marquage de position pour adopter une position adéquate.

Le premier marquage de position est visible de l'utilisateur qui réalise le montage de la paroi de construction sur l'ossature. Le deuxième marquage de position est visible de l'utilisateur qui assemble l'élément de construction selon l'invention en réalisant le montage de la pluralité d'absorbeurs de résonance sur la paroi de construction.

Le premier marquage de position et le deuxième marquage de position sont par exemple situés sur des faces opposées de la paroi de construction. Lorsque l'élément de construction est à double parois, le premier marquage de position est préférentiellement disposé sur la face externe de la paroi de construction qui est la face par laquelle est inséré le moyen de solidarisation. Lorsque l'élément de construction est à double parois, le deuxième marquage de position est préférentiellement disposé sur la face interne, qui est la face qui reçoit l'absorbeur de résonance. Alternativement, le premier marquage de position et le deuxième marquage de position sont disposés sur au moins une même face de la paroi de construction. Avantageusement encore, le premier marquage de position et le deuxième marquage de position sont disposés sur les deux faces de la paroi de construction.

Dans un exemple de réalisation, le premier marquage de position se situe dans la région périphérique de la paroi de construction et le deuxième marquage de position se situe dans la une région centrale de la paroi de construction.

Le deuxième marquage de position est par exemple configuré pour différents types d'absorbeurs de résonance. Par exemple, différents types de deuxième marquage de position peuvent coexister sur une même paroi de construction, de sorte à ce qu'une même paroi puisse être facilement équipée de l'un ou l'autre des types d'absorbeur de résonance. Dans ce cas, les différents types de deuxième marquage de position sont différentiables.

Le premier marquage de position et/ou le deuxième marquage de position sont des marquages visuels. On comprend par « marquage visuel » le fait que la paroi de construction soit au moins poinçonnée, ou munie d'un symbole ou d'un signe identifiant le premier marquage de position et/ou le deuxième marquage de position comme tels. Par exemple, un poinçon ou une croix est ménagée dans l'épaisseur de la paroi de construction. Par exemple, le premier marquage de position et/ou le deuxième marquage correspond au moins à un trait plein ou discontinu, ou à une croix, ou à un cercle, ou toute autre forme géométrique. Dans un exemple de réalisation, le deuxième marquage visuel est accompagné d'un sigle, par exemple un numéro, permettant de lui associer un type d'absorbeur de résonance. Dans un autre de réalisation, un gabarit d'au moins un élément de l'absorbeur de résonance ou de tout l'absorbeur de résonance est reproduit sur la paroi de construction pour en indiquer la position et l'orientation de celui-ci.

Selon un aspect de l'invention, le deuxième marquage de position permet de positionner au moins le support de l'absorbeur de résonance. Lorsque le support est fixé à la paroi de construction via le premier moyen de fixation et le deuxième moyen de fixation, le deuxième marquage de position indique au moins la position du premier moyen de fixation et/ou du deuxième moyen de fixation.

Selon un aspect de l'invention, le deuxième marquage de position permet de positionner au moins un dispositif de fixation du support de l'absorbeur de résonance. Le dispositif de fixation est distinct du support. Le dispositif de fixation permet de fixer le support sur la paroi de construction. Par exemple, lorsque le dispositif de fixation du support de l'absorbeur de résonance sur la paroi de construction est une vis, le deuxième marquage de position situe un point d'insertion de la vis dans la paroi de construction. Par exemple, lorsque le dispositif de fixation du support de l'absorbeur de résonance sur la paroi de construction est un matériau adhérant, tel une bande collante, par exemple double-faces, une substance collante comme une colle, le deuxième marquage de position localise la position du matériau adhérant. Dans le cas d'une bande collante, la bande collante est, dans un premier temps, disposée en fonction du deuxième marquage, sur la paroi de construction, et dans en deuxième temps, le support est fixé contre la bande collante.

Selon un aspect de l'invention, le deuxième marquage de position permet de positionner au moins le poids de l'absorbeur de résonance.

Selon un aspect de l'invention, au moins un dispositif de fixation fixe l'absorbeur de résonance à la première paroi de construction. Le dispositif de fixation maintien l'absorbeur de résonance en position sur la première paroi de résonance. Il autorise son oscillation autour de la position d'équilibre. Le dispositif de fixation est une pièce rapportée sur l'absorbeur de résonance et sur la première paroi de construction. Par exemple, le dispositif de fixation est ajouté par collage, vissage ou tout autre moyen permettant de solidariser l'absorbeur de résonance avec la première paroi de construction.

Selon un aspect de l'invention, l'absorbeur de résonance comprend au moins un support, le support comprenant une surface de fixation fixée à la première paroi de construction par le dispositif de fixation. Le support est solidarisé sur la paroi de construction. Le support est configuré pour maintenir la lame, le support étant fixe de par sa coopération avec le dispositif de fixation, tout en gardant la lame apte à être mobile par oscillation. Par exemple, le support fixe la lame en deux points, à une première extrémité longitudinale de la lame et à une deuxième extrémité longitudinale de la lame. Par exemple, le support comprend un premier moyen de fixation de la lame et un deuxième moyen de fixation de la lame, le premier moyen de fixation de la lame fixant la première extrémité longitudinale de la lame et le deuxième moyen de fixation de la lame fixant la deuxième extrémité longitudinale de la lame.

Selon un aspect de l'invention, le dispositif de fixation comprend un matériau adhérant. Le dispositif de fixation a des propriétés physiques d'adhérence. Par exemple, le dispositif de fixation comprend une colle.

Selon un aspect de l'invention, le matériau adhérant est une bande collante. La bande est une lame, une feuille ou un tissage de faible épaisseur, comprenant deux surfaces. La bande est longue et étroite. Elle est apte à être découpée de sorte à l'adapter aux dimensions du support. Elle est avantageusement souple de sorte à s'adapter au support. Par exemple, la bande est une feuille de papier. La bande est collante sur l'une et l'autre de ses surfaces.

La bande collante lorsqu'elle est, par exemple, imprégnée de colle. Par exemple, la bande est enduite de colle. La bande est collante sur l'une et/ou l'autre de ses faces.

Selon un aspect de l'invention, le support comprend au moins deux surfaces de fixation et deux dispositifs de fixation coopèrent avec l'une et l'autre des surfaces de fixation pour fixer le support sur la première paroi de construction. Le support est fixé au moyen de deux dispositifs de fixation distincts. Par exemple, un premier dispositif de fixation fixe une première surface de fixation du support, et un deuxième premier dispositif de fixation fixe une deuxième surface de fixation du support. Cette fixation en deux points distincts fiabilise la fixation du support.

Dans un exemple de réalisation, le premier moyen de fixation de la lame comprend la première surface de fixation et le deuxième moyen de fixation de la lame comprend la deuxième surface de fixation.

Selon un aspect de l'invention, un même dispositif de fixation fixe une pluralité d'absorbeurs de résonance. Le dispositif de fixations s'étend alors sur la première paroi de construction. Par exemple, le dispositif de fixation est de dimension supérieure aux surfaces de fixation des supports de la pluralité d'absorbeurs de résonance.

Selon un aspect de l'invention, les absorbeurs de résonance de la pluralité d'absorbeurs de résonance ont leur ou leurs surfaces de fixation alignées selon un axe d'extension du dispositif de fixation. Par exemple, le premier dispositif de fixation fixe les premières surfaces de fixation des supports des absorbeurs de résonance de la pluralité d'absorbeurs de résonance et le deuxième dispositif de fixation fixe les deuxièmes surfaces de fixation des supports des absorbeurs de résonance de la pluralité d'absorbeurs de résonance, les premières surfaces de fixation étant alignées selon l'axe d'extension du premier dispositif de fixation, et les deuxièmes surfaces de fixation étant alignées selon l'axe d'extension du deuxième dispositif de fixation. Cette configuration s'applique notamment dans le cas dans de deux bandes collantes parallèles, avantageusement dans le cas du dispositif de fixation correspondant à un adhésif double-face.

Selon un aspect de l'invention, la bande collante comprend une première surface adhérant à la première paroi de construction et une deuxième surface adhérant au support. La bande est collante sur l'une et l'autre de ses faces. Par exemple, la bande collante est un adhésif double-face.

D'autres caractéristiques, détails et avantages de l'invention ressortiront plus clairement à la lecture de la description donnée ci-après à titre indicatif en relation avec des dessins dans lesquels :
[Fig 1] est une vue générale, en perspective, d'un élément de construction comprenant des absorbeurs de résonance selon l'invention ;
[Fig 2] est une vue en perspective d'un absorbeur de résonance selon l'invention ;
[Fig 3] est une vue schématique de l'absorbeur de résonance selon l'invention dans une première position d'utilisation ;
[Fig 4] est une vue schématique de l'absorbeur de résonance selon l'invention dans une deuxième position d'utilisation ;
[Fig 5] est une vue schématique de l'absorbeur de résonance selon l'invention dans une troisième position d'utilisation ;
[Fig 6] est une vue générale et en perspective d'un élément de construction selon l'invention, dans un premier mode de réalisation,
[Fig 7] est une vue schématique de l'élément de construction de la figure 6,
[Fig 8] est une vue schématique de l'élément de construction dans un deuxième mode de réalisation,
[Fig 9] est une vue schématique de l'élément de construction selon l'invention dans un troisième mode de réalisation,
[Fig 10] est une vue schématique de l'élément de construction selon l'invention dans un quatrième mode de réalisation,
[Fig 11] est une vue schématique, partielle et en coupe longitudinale de l'élément de construction selon l'invention muni d'un dispositif de fixation,
[Fig 12] est une vue schématique de l'élément de construction selon l'invention illustré en figure 11.

Il faut tout d'abord noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales, se réfèrent à l'orientation de l'absorbeur de résonance selon l'invention. La direction longitudinale correspond à l'axe longitudinal de l'absorbeur de résonance dans lequel il s'étend majoritairement, alors que les orientations latérales correspondent à des droites concourantes, c'est-à-dire qui croisent la direction longitudinale, notamment perpendiculaires à l'axe longitudinal. Les dénominations « premier », « deuxième », ... n'ont pas vocation à hiérarchiser les termes qu'ils accompagnent mais ont pour but de distinguer ces termes.

### Premier aspect de l'invention

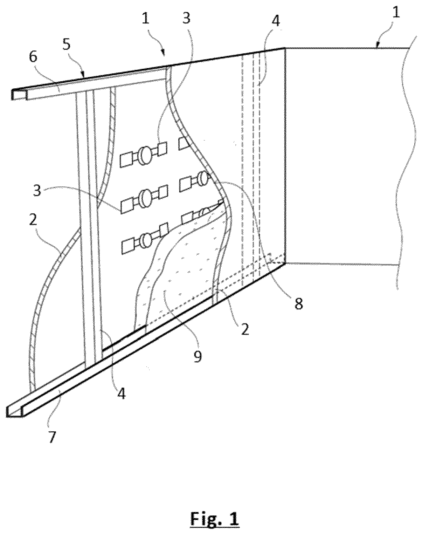

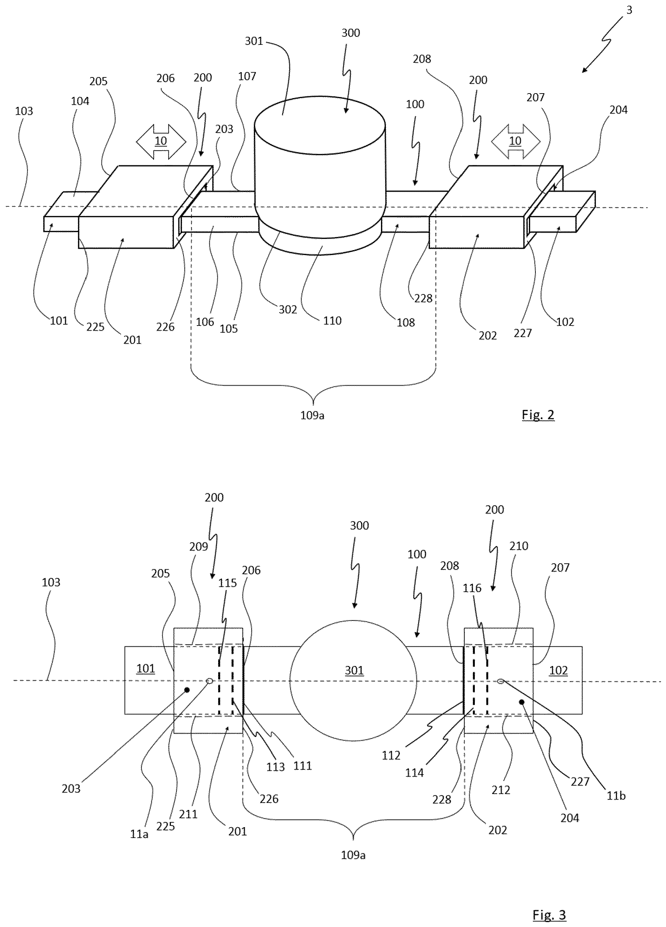

La figure 1 montre un élément de construction 1 selon un exemple de réalisation de l'invention. Cet élément de construction 1 comprend au moins une paroi de construction 2 en un matériau rigide et au moins un absorbeur de résonance 3 selon l'invention. L'élément de construction 1 décrit en figure 1 comprend en l'espèce deux parois de construction 2, dressées verticalement l'une en face de l'autre. Il est entendu qu'une telle disposition est un exemple et qu'une disposition horizontale ou inclinée est également couverte par l'invention. L'élément de construction 1 comprend une pluralité d'absorbeurs de résonance 3, l'absorbeur de résonance 3 étant plus particulièrement décrit dans la figure 2. Pour éviter de surcharger la figure 1, seulement certains de ces absorbeurs de résonance 3 sont référencés.

La paroi de construction 2 est par exemple une plaque de plâtre à feuilles de papier ou de carton disposée sur les deux grandes faces de la plaque de plâtre. De telles plaques de plâtre sont généralement d'une épaisseur comprise entre 6 mm et 25 mm, pour une largeur comprise entre 400 mm et 1250 mm et une hauteur recoupée en fonction de la surface à couvrir, à partir d'une hauteur issue de fabrication comprise entre 300 mm et 4210 mm.

L'élément de construction 1 selon l'invention comprend également une armature 4 qui est interposée entre les deux parois de construction 2. Une telle armature 4 est un organe porteur des parois de construction 2, notamment quand celles-ci sont fixées sur cette armature 4 par vissage, agrafage ou cloutage. Dans l'exemple illustré sur la figure 1, l'armature 4 est un montant, c'est-à-dire un organe dressé verticalement.

L'armature 4 peut faire partie d'une ossature 5 qui forme un squelette de maintien mécanique des deux parois de construction 2. Une telle ossature 5 peut également comprendre un rail supérieur 6 et un rail inférieur 7 entre lesquels l'armature 4 est au moins disposée, et avantageusement une multiplicité de telles armatures 4. Le rail supérieur 6 est disposé horizontalement et forme une zone d'appui et de fixation d'un bord périphérique supérieur d'au moins une des deux parois de construction 2. Un tel rail supérieur 6 est solidarisé au plafond de la pièce destinée à recevoir l'élément de construction 1 selon l'invention. Le rail inférieur 7 est disposé horizontalement et forme une zone d'appui et de fixation d'un bord périphérique inférieur d'au moins une des deux parois de construction 2. Un tel rail inférieur 7 est solidarisé au sol de la pièce destinée à recevoir l'élément de construction 1 selon l'invention. Par exemple, l'ossature 5 peut être réalisée en bois, ou en un matériau métallique, ou en tout autre matériau compatible avec l'invention. Il va de soi que toute construction avec des montants d'ossature 5 en simple forme de montants ou tasseaux, en bois par exemple, convient également, ainsi que des ossatures 5 faites d'appuis ou suspentes ponctuelles.

Un espace intermédiaire 8 est ménagé entre les deux parois de construction 2 et la ou les armatures 4. L'épaisseur de cet espace intermédiaire 8 est déterminée par une épaisseur de l'armature 4. Selon l'invention, cet espace intermédiaire 8 loge les absorbeurs de résonance 3.

Les absorbeurs de résonance 3 sont répartis dans l'espace intermédiaire 8, c'est-à-dire sur une face interne à la paroi de construction 2, en étant néanmoins à une distance non-nulle de l'armature 4, et avantageusement non nulle du rail supérieur 6 et du rail inférieur 7. D'une manière plus générale, les absorbeurs de résonance 3 sont à distance non-nulle de l'ossature 5. L'agencement des absorbeurs de résonance 3 illustrée en figure 1 est non limitative, et l'on pourrait, sans sortir du cadre de l'invention, avoir un agencement différent.

Ces absorbeurs de résonance 3 sont répartis sur une hauteur et une largeur de l'espace intermédiaire 8 et peuvent être rendus solidaires de l'une et/ou l'autre des parois de construction 2.

Dans un exemple de réalisation illustré à la figure 1, l'élément de construction 1 peut comprendre un élément d'isolation 9 acoustique et/ou thermique. Bien que représenté de manière tronquée, un tel élément d'isolation 9 est disposé de haut en bas entre le rail supérieur 6 et le rail inférieur 7, et de gauche à droite, entre deux supports. Un tel élément d'isolation 9 peut occuper tout ou partie de l'épaisseur de l'espace intermédiaire 8.

L'élément d'isolation 9 est réalisé dans un matériau poreux, par exemple à cellules ouvertes, de sorte à autoriser un mouvement de l'air au travers de ses pores. Selon un exemple, un tel matériau poreux se présente sous forme de fibres libres ou agglomérées entre elles par un liant, sous forme de matériaux granulaires, ou encore sous forme de mousse. Un tel matériau poreux est par exemple une laine de verre, une mousse à pores ouverts, une laine de roche ou encore un matériau à base de laine végétale tel que le bois, le chanvre ou le lin.

La figure 2 montre l'absorbeur de résonance 3, illustré assemblé tel qu'il peut l'être au préalable à sa fixation sur la paroi de construction 2.

L'absorbeur de résonance 3 comprenant au moins une lame 100, un support 200 et une masse 300. Dans cet exemple de réalisation, la lame 100, le support 200 et la masse 300 sont des éléments distincts, pouvant être dissociés les uns les autres, et notamment trouvés sous la forme de pièces détachées dans un kit de fabrication d'un absorbeur de résonance 3 selon l'invention.

Le support 200 est configuré pour adopter alternativement au moins deux positions d'utilisation par rapport à la lame 100. Dans une première position d'utilisation, l'absorbeur de résonance 3 présente une première fréquence de résonance. Dans une deuxième position d'utilisation, l'absorbeur de résonance 3 présente une deuxième fréquence de résonance. En l'espèce, le support 200 est illustré, dans la figure 2, dans la première position d'utilisation.

La lame 100 a une première extrémité longitudinale 101 opposée à une deuxième extrémité longitudinale 102. La lame 100 étend sa plus grande dimension selon un axe longitudinal 103. La lame 100 comprend une première face 104 et une deuxième face 105 opposée à la première face 104. La première face 104 et la deuxième face 105 sont raccordées par une troisième face 106 et une quatrième face 107, la première face 104, la deuxième face 105, la troisième face 106 et la quatrième face 107 s'étendant parallèlement à l'axe longitudinal 103 de la lame 100.

La lame 100 comprend une portion intermédiaire 108 entre la première extrémité longitudinale 101 et la deuxième extrémité longitudinale 102. Cette portion intermédiaire 108 de la lame 100 comprend une partie utile 109 apte à osciller avec la masse 300. La dimension longitudinale de la partie utile 109a est ici celle correspondant à la première position d'utilisation.

La lame 100 comprend une portion cylindrique 110 centrale destinée à recevoir la masse 300. La portion cylindrique 110 est inclue dans la portion intermédiaire 108 et dans la partie utile 109 apte à osciller. La portion cylindrique 110 est monobloc avec le reste de la lame 100, qui a une épaisseur constante. L'épaisseur est la distance la plus courte mesurée entre la première face 104 et la deuxième face 105. La lame 100 est apte à osciller, au niveau de sa partie utile 109, en réponse à au moins une fréquence de respiration de la paroi de construction 2.

Le support 200 comprend un premier moyen de fixation 201 apte à coopérer avec la première extrémité longitudinale 101 de la lame 100 et un deuxième moyen de fixation 202 apte à coopérer avec la deuxième extrémité longitudinale 102 de la lame 100. La dimension longitudinale de la partie utile 109 est mesurée entre le premier moyen de fixation 201 et le deuxième moyen de fixation 202. Par ailleurs, au moins le premier moyen de fixation 201 et/ou le deuxième moyen de fixation 202 sont configurés pour adopter au moins les deux positions d'utilisation distinctes sur la lame 100.

En l'espèce, le premier moyen de fixation 201 et le deuxième moyen de fixation 202 sont identiques en forme et en dimensions. Un premier logement 203 traversant est ménagé dans le premier moyen de fixation 201 et un deuxième logement 204 traversant est ménagé dans le deuxième moyen de fixation 202. Par « traversant » on entend que le premier logement 203 et le deuxième logement 204 comprennent chacun deux ouvertures 205, 206, 207, 208. Le premier moyen de fixation 201 et le deuxième moyen de fixation 202 comprennent chacun deux tranches 225, 226, 227, 228. Chaque tranche 225, 226, 227, 228 comprend une ouverture 205, 206, 207, 208.

La première extrémité longitudinale 101 de la lame 100 et la deuxième extrémité longitudinale 102 de la lame 100 sont configurés pour être montées coulissant par rapport au support 200, comme des flèches bidirectionnelles 10 l'illustrent. Le premier moyen de fixation 201 comprend, dans une première tranche 225, une première ouverture 205 et, dans une deuxième tranche 226, une deuxième ouverture 206, permettant l'insertion par coulissage de la première extrémité longitudinale 101 de la lame 100. Le deuxième moyen de fixation 202 comprend, dans une troisième tranche 227, une troisième ouverture 207 et, dans une quatrième tranche 228, une quatrième ouverture 208 permettant l'insertion par coulissage de la deuxième extrémité longitudinale 102 de la lame 100.

Le premier moyen de fixation 201 et/ou le deuxième moyen de fixation 202 forment ainsi des coulisseaux.

Lors du montage de la lame 100 sur le support 200, la première extrémité longitudinale 101 est engagée dans le premier moyen de fixation 201 via sa deuxième ouverture 206, et la deuxième extrémité longitudinale 102 est engagée dans le deuxième moyen de fixation 202 via sa quatrième ouverture 208.

Lorsque l'absorbeur de résonance 3 est pré-assemblé, la deuxième ouverture 206 du premier moyen de fixation 201 et la quatrième ouverture 208 du deuxième moyen de fixation 202 sont situées, respectivement, entre la masse 300 et la première ouverture 205 du premier moyen de fixation 201 d'une part, et entre la masse 300 et la troisième ouverture 207 du deuxième moyen de fixation 202, d'autre part.

Le premier logement 203 est délimité par une première paroi interne 209 du premier moyen de fixation 201, le premier logement 203 et la première paroi interne 209 étant illustrés par transparence aux figures 3, 4 et 5. La première extrémité longitudinale 101 de la lame 100 prend appui contre la première paroi interne 209. Le deuxième logement 204 est délimité par une deuxième paroi interne 210 du deuxième moyen de fixation 202, le deuxième logement 204 et la deuxième paroi interne 210 étant illustrés par transparence aux figures 3, 4 et 5. La deuxième extrémité longitudinale 102 de la lame 100 prend appui contre la deuxième paroi interne 210. En phase de pré-assemblage, un premier jeu 211 autorise le coulissement entre la première paroi interne 209 et la première extrémité longitudinale 101 de la lame 100. Il en va de même pour le coulissement entre la deuxième paroi interne 210 et la première extrémité longitudinale 102 de la lame 100, où un deuxième jeu 212 autorise ce glissement. Le premier jeu 211 et le deuxième jeu 212 sont illustrés par transparence aux figures 3, 4 et 5.

La masse 300 est portée de façon centrée par la lame 100, à la fois longitudinalement, entre le premier moyen de fixation 201 et le deuxième moyen de fixation 202, et transversalement, entre la troisième face 106 et la quatrième face 107 de la lame 100. La masse 300 est solidarisée avec la lame 100, par exemple au moyen d'une vis, ici non visible car insérée du côté de la deuxième face 105 de la lame 100. La masse 300 comprend une première surface 301 et une deuxième surface 302 opposée à la première surface 301. La portion cylindrique 110 de la lame 100 est destinée à recevoir la masse 300, elle-même cylindrique. La deuxième surface 302 de la masse 300 prend appui sur la première face 104 de la lame 100, se superposant sur la portion cylindrique 110. Les figures illustrent une masse 300 de section circulaire, mais il est entendu que l'invention couvre toute forme de masse.

Le support 200 est destiné à être fixé à la paroi de construction 2 comme illustré par la figure 1. Le support 200 est par exemple fixé par collage, vissage ou tout autre moyen permettant de solidariser le support 200 sur la paroi de construction 2. Le premier moyen de fixation 201 et le deuxième moyen de fixation 202 sont solidarisés avec la paroi de construction 2 de sorte à ce que la deuxième face 105 de la lame 100 soit en vis-à-vis de la paroi de construction 2. Ainsi la lame 100 est disposée entre la masse 300 et la paroi de construction 2.

Les figures 3, 4 et 5 illustrent l'absorbeur de résonance 3 de la figure 2 dans différentes positions d'utilisation, avec une partie utile 109 différente dans chaque position d'utilisation. La description de la figure 2 s'applique *mutatis mutandis* aux figures 3, 4 et 5 qui illustrent différentes mises en oeuvre de l'absorbeur de résonance 3 présenté en figure 2, et on pourra se reporter à la description faite en figure 2 pour comprendre et mettre en oeuvre l'invention.

Pour passer de l'une à l'autre des positions d'utilisations illustrées aux figures 3, 4 et 5, le premier moyen de fixation 201 et le deuxième moyen de fixation 202 sont déplacés par coulissement, et ce en symétrie par rapport à la masse 300. Ce mode opératoire n'est pas limitatif, et l'invention vise également la possibilité d'effectuer un positionnement dissymétrique de la masse. Alors, la masse 300 est décentrée longitudinalement.

Lorsque l'absorbeur de résonance 3 est accordé, le coulissement est bloqué à l'aide d'un moyen de blocage 11. En présence du moyen de blocage 11, l'absorbeur de résonance 3 ne peut plus être accordé. L'absorbeur de résonance 3 comprend au moins un moyen de blocage 11 permettant de bloquer le premier moyen de fixation 201 et le deuxième moyen de fixation 202 par rapport à la lame 100 dans l'une des positions d'utilisation. Le moyen de blocage 11 peut également avoir pour fonction de fixer le support 200 à la paroi de construction 2. En l'espèce, deux moyens de blocage 11, par exemple des rivets ou vis 11a, 11b, bloquent la lame 100 avec le support 200 : un premier rivet ou vis 11a bloque le premier moyen de fixation 201 et la première extrémité longitudinale 101 de la lame 100 et un deuxième rivet ou vis 11b bloque le deuxième moyen de fixation 202 et la deuxième extrémité longitudinale 102 de la lame 100.

Les figures 3, 4 et 5 montrent la lame 100 comprend au moins le repère de position 111 de l'un des moyens de fixation 201, 202 permettant d'adopter la première position d'utilisation. La lame 100 comprend au moins une marque de position 113 de l'un des moyens de fixation 201, 202 permettant d'adopter la deuxième position d'utilisation. La lame 100 comprend en outre au moins un repère additionnel 115 de position de l'un des moyens de fixation 201, 202 permettant d'adopter une troisième position d'utilisation. Le repère de position 111 est un marquage visuel ménagé sur la lame 100. Il en est de même pour la marque de position 113 et le repère additionnel 115 de position.

Dans la figure 3, la figure 4 et la figure 5, ces marquages visuels sont des traits pleins tracés sur la première face 104 de la lame 100. Ces marquages visuels s'étendent perpendiculairement à l'axe longitudinal 103. Lorsque ces marquages visuels sont masqués par le support 200, de par leur position, ils sont illustrés en pointillés.

En l'espèce, la lame 100 comprend le repère de position 111, dit premier repère de position 111, et un deuxième repère de position 112. La lame 100 comprend la marque de position 113, dit première marque de position 113, et une deuxième marque de position 114. La lame 100 comprend le repère additionnel 115 de position, dit premier repère additionnel 115 de position, et un deuxième repère additionnel 116 de position.

Le premier repère de position 111 et le deuxième repère de position 112 permettent de visualiser la position que le premier moyen de fixation 201 et le deuxième moyen de fixation 202 doivent adopter pour être en première position d'utilisation. La première marque de position 113 et la deuxième marque de position 114 permettent de visualiser la position que le premier moyen de fixation 201 et le deuxième moyen de fixation 202 doivent adopter être en deuxième position d'utilisation. Le premier repère additionnel 115 de position et le deuxième repère additionnel 116 de position permettent de visualiser la position que le premier moyen de fixation 201 et le deuxième moyen de fixation 202 doivent adopter pour être en troisième position d'utilisation.

Dans l'exemple de la figure 3, la deuxième tranche 226 du premier moyen de fixation 201 est alignée sur le premier repère de position 111 et la quatrième tranche 228 du deuxième moyen de fixation 202 coïncide avec le deuxième repère de position 112. La dimension longitudinale de la partie utile 109a est ici celle correspondant à la première position d'utilisation.

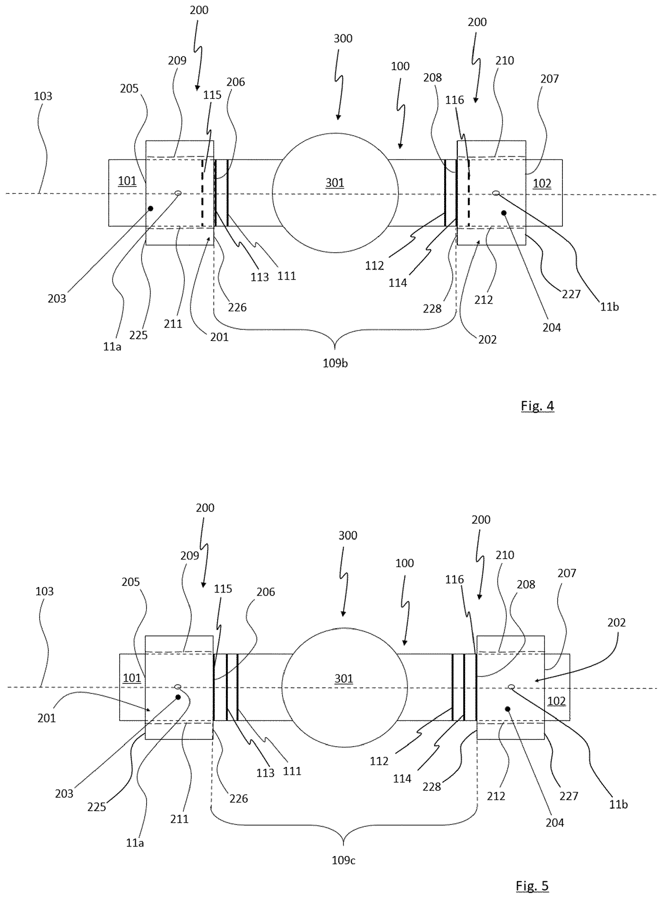

Dans l'exemple de la figure 4, la deuxième tranche 226 du premier moyen de fixation 201 est alignée sur la première marque de position 113 et la quatrième tranche 228 du deuxième moyen de fixation 202 coïncide avec la deuxième marque de position 114. La dimension longitudinale de la partie utile 109b est ici celle correspondant à la deuxième position d'utilisation.

Dans l'exemple de la figure 5, la deuxième tranche 226 du premier moyen de fixation 201 est alignée sur le premier repère additionnel 115 de position et la quatrième tranche 228 du deuxième moyen de fixation 202 coïncide avec le deuxième repère additionnel 116 de position. La dimension longitudinale de la partie utile 109c est ici celle correspondant à la troisième position d'utilisation.

On comprend à la lecture de ce qui précède que la présente invention selon le premier aspect propose un absorbeur de résonance polyvalent, configuré pour être accordé en fonction du type de paroi de construction sur lequel il est destiné être fixé. Cet absorbeur de résonance, destiné notamment à être inclus dans un ensemble de construction, offre plusieurs configurations, ce qui permet de simplifier le nombre de références d'absorbeurs de résonance tout en garantissant l'adaptation de l'absorbeur de résonance au type de paroi de construction. Le choix de l'absorbeur de résonance est ainsi simplifié lors du montage.

L'invention ne saurait toutefois se limiter aux moyens et configurations décrits et illustrés ici, et elle s'étend également à tout moyen ou configuration équivalents et à toute combinaison technique opérant de tels moyens. En particulier, la forme de l'absorbeur de résonance peut être modifiée sans nuire à l'invention, dans la mesure où l'absorbeur de résonance, in fine, remplit les mêmes fonctionnalités que celles décrites dans ce document.

### Deuxième aspect de l'invention

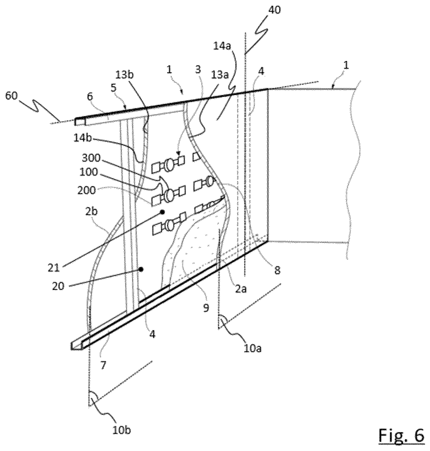

La figure 6 montre un élément de construction 1 selon un exemple de réalisation de l'invention. Cet élément de construction 1 comprend au moins une paroi de construction 2a, 2b et au moins une pluralité d'absorbeurs de résonance 3. L'élément de construction 1 selon l'invention décrit en figure 6 comprend en l'espèce deux parois de construction 2a, 2b, une première paroi de construction 2a et une deuxième paroi de construction 2b, dressées verticalement l'une en face de l'autre, parallèles l'une à l'autre.

Chaque paroi de construction 2a, 2b s'étend dans un plan d'extension majoritaire 10a, 10b, respectivement nommés premier plan d'extension majoritaire 10a et deuxième plan d'extension majoritaire 10b. Il est entendu qu'une telle disposition est un exemple et qu'une disposition horizontale ou inclinée de l'élément de construction 1 est également couverte par l'invention.

L'élément de construction 1 comprend une pluralité d'absorbeurs de résonance 3 solidarisés, dans l'exemple de la figure 6, avec la deuxième paroi de construction 2b. La première paroi de construction 2a et la deuxième paroi de construction 2b sont séparées par un espace intermédiaire 8, la pluralité d'absorbeurs de résonance 3 étant située dans l'espace intermédiaire 8.

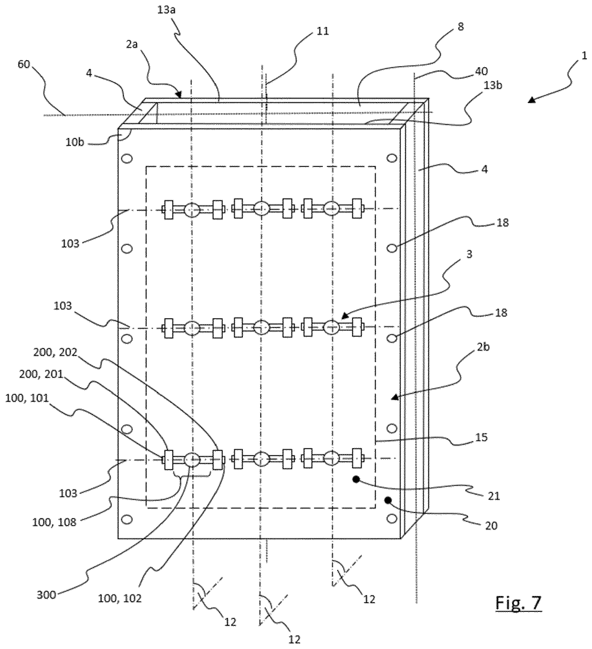

L'absorbeur de résonance 3 comprend au moins une lame 100, un support 200 et un poids 300. L'absorbeur de résonance 3 est décrit plus particulièrement dans la figure 7.

Selon l'invention, on considère que les figures 6 à 10 sont représentatives d'une masse de la pluralité d'absorbeurs de résonance 3 qui représente 2 à 25% d'une masse totale de l'élément de construction 1, avantageusement 5 à 15%, encore plus avantageusement 10%.

Par exemple, la masse de la pluralité d'absorbeurs de résonance 3 est comprise entre 50g et 1000g, pour une masse totale de l'élément de construction 1 comprise entre 15kg et 50kg, notamment 17,5kg pour une cloison 72/48 et 35kg pour une cloison 120/70.

Une autre manière de définir l'invention est de déterminer un nombre d'absorbeurs de résonance 3 donnés par surface d'élément de construction en m².

Le tableau ci-dessous synthétise cette idée :

**[Tableau 1]**

| Minimum et Maximum d'inclusion massique, en % | Masse d'un absorbeur de résonance, en grammes | | Cloison 72/48 | Cloison 120/70 |
|---|---|---|---|---|
| | | Poids au m², en kg | 17,5 | 35 |
| 2 | 50 | Nombre d'absorbeurs de résonance par m² | 7 | 14 |
| | 1000 | | 0,35 | 0,7 |
| 25 | 50 | | 87,5 | 175 |
| | 1000 | | 4,37 | 8,75 |

La première paroi de construction 2a et la deuxième paroi de construction 2b, prises en tant que telles, sont, dans l'exemple de la figure 6, identiques. Chaque paroi de construction 2a, 2b est par exemple une plaque de plâtre à feuilles de papier ou de carton disposée sur les deux grandes faces de la plaque de plâtre. De telles plaques de plâtre sont généralement d'une épaisseur comprise entre 6 mm et 25 mm, pour une largeur comprise entre 400mm et 1250mm et une hauteur recoupée en fonction de la surface à couvrir, à partir d'une hauteur issue de fabrication comprise entre 300mm et 4210mm.

L'élément de construction 1 selon l'invention comprend également un premier rail 4 qui est interposée entre la première paroi de construction 2a et la deuxième paroi de construction 2b. Le premier rail 4 s'étend selon un premier axe 40. Un tel premier rail 4 est un organe porteur de la paroi de construction 2a, 2b, en l'espèce de la première paroi de construction 2a et de la deuxième paroi de construction 2b, notamment quand celles-ci sont fixées sur ce premier rail 4 par vissage. Dans l'exemple illustré sur la figure 6, le premier rail 4 est un montant, c'est-à-dire un organe dressé verticalement.

Le premier rail 4 peut faire partie d'une ossature 5 qui forme un squelette de maintien mécanique de la paroi de construction 2a, 2b, en l'espèce de la première paroi de construction 2a et de la deuxième paroi de construction 2b. Une telle ossature 5 peut également comprendre un rail supérieur dit deuxième rail 6 et un rail inférieur 7 entre lesquels le premier rail 4 est au moins disposée, et avantageusement une multiplicité de telles premiers rails 4. Le deuxième rail 6 s'étend selon un deuxième axe 60 de l'ossature 5, différent du premier axe 40 de l'ossature 5, avantageusement perpendiculaire au premier axe 40. L'ossature 5 est exclue du calcul de la masse totale de l'élément de construction 1.

Le deuxième rail 6 est disposé horizontalement et forme une zone d'appui et de fixation d'un bord périphérique supérieur d'au moins la première paroi de construction 2a et/ou de la deuxième paroi de construction 2b, le bord périphérique supérieur étant situé dans une région périphérique 20 de ladite paroi. Un tel deuxième rail 6 est solidarisé au plafond de la pièce destinée à recevoir l'élément de construction 1 selon l'invention. Le rail inférieur 7 est disposé horizontalement et forme une zone d'appui et de fixation d'un bord périphérique inférieur de l'une de la première paroi de construction 2a et/ou de la deuxième paroi de construction 2b, le bord périphérique inférieur étant situé dans la région périphérique 20 de ladite paroi. Un tel rail inférieur 7 est solidarisé au sol de la pièce destinée à recevoir l'élément de construction 1 selon l'invention. Par exemple, l'ossature 5 peut être réalisée en bois, ou en métal, ou en tout autre matériau connu compatible avec l'invention.

L'espace intermédiaire 8 est ménagé entre la première paroi de construction 2a et la deuxième paroi de construction 2b et la ou les premiers rails 4. L'épaisseur de cet espace intermédiaire 8 est déterminée par une épaisseur du premier rail 4. Selon l'invention, cet espace intermédiaire 8 loge les absorbeurs de résonance 3.

Les absorbeurs de résonance 3 sont répartis dans l'espace intermédiaire 8, c'est-à-dire sur une face interne 13a de la première paroi de construction 2a et/ou sur la face interne 13b de la deuxième paroi de construction 2b, la face interne 13a, 13b étant orientée vers l'espace intermédiaire 8 et opposée à une face externe 14a, 14b. Les absorbeurs de résonance 3 sont à une distance non-nulle du premier rail 4, et avantageusement non nulle du deuxième rail 6 et du rail inférieur 7. D'une manière plus générale, les absorbeurs de résonance 3 sont à distance non-nulle de l'ossature 5. Les absorbeurs de résonance 3 sont situés dans une région centrale 21 bordée par la région périphérique 20. L'agencement des absorbeurs de résonance 3 illustrée en figure 6 est non limitative, et l'on pourrait, sans sortir du cadre de l'invention, avoir un agencement différent.

Ces absorbeurs de résonance 3 sont répartis sur une hauteur et une largeur de l'espace intermédiaire 8 et peuvent être rendus solidaires de l'une et/ou l'autre des parois de construction 2a, 2b.

Dans un exemple de réalisation illustré à la figure 6, l'élément de construction 1 peut comprendre un élément d'isolation 9 acoustique et/ou thermique. Bien que représenté de manière tronquée, un tel élément d'isolation 9 est disposé de haut en bas entre le deuxième rail 6 et le rail inférieur 7, et de gauche à droite. Un tel élément d'isolation 9 peut occuper tout ou partie de l'épaisseur de l'espace intermédiaire 8.

L'élément d'isolation 9 est réalisé dans un matériau poreux, par exemple à cellules ouvertes, de sorte à autoriser un mouvement de l'air au travers de ses pores. Selon un exemple, un tel matériau poreux se présente sous forme de fibres libres ou agglomérées entre elles par un liant, sous forme de matériaux granulaires, ou encore sous forme de mousse. Un tel matériau est par exemple une laine de verre, une mousse à pores ouverts, une laine de roche ou encore un matériau à base de laine végétale tel que le bois, le chanvre ou le lin.

La figure 7 montre la pluralité d'absorbeurs de résonance 3 de la figure 6, solidarisée à la deuxième paroi de construction 2b. La pluralité d'absorbeurs de résonance 3, située dans l'espace intermédiaire 8, est illustrée par transparence et en traits pleins pour faciliter la lecture de la figure 7. La pluralité d'absorbeurs de résonance 3 est fixée à la face interne 13b de la deuxième paroi de construction 2b, la deuxième paroi de construction 2b faisant ici face au lecteur. La face interne 13a de la première paroi de construction 2a est dépourvue d'absorbeurs de résonance 3. La première paroi de construction 2a de l'élément de construction 1 est représentée en arrière-plan.

Dans cet exemple de réalisation, la pluralité d'absorbeurs de résonance 3 comprend neuf absorbeurs de résonance 3. Pour un absorbeur de résonance 3 donné, la lame 100 a une première extrémité 101 opposée à une deuxième extrémité 102. La lame 100 étend sa plus grande dimension selon un axe d'extension 103. Dans la pluralité d'absorbeurs de résonance 3, plusieurs absorbeurs de résonance 3 peuvent avoir leurs axes longitudinaux 103 confondus. En l'espèce, les absorbeurs de résonance 3 sont alignés, par groupe de trois, sur un même axe d'extension 103. L'ensemble des axes longitudinaux 103 sont compris dans un même plan parallèle au plan d'extension majoritaire 10b.

Selon un exemple de l'invention, au moins un absorbeur de résonance 3 de la pluralité d'absorbeurs de résonance 3 étend sa lame 100 horizontalement ou verticalement. En l'espèce, tous les axes longitudinaux 103 sont horizontaux et parallèles au deuxième axe 60.

La lame 100 comprend une portion intermédiaire 108 entre la première extrémité 101 et la deuxième extrémité 102. Cette portion intermédiaire 108 est apte à osciller avec le poids 300 qu'elle porte. En l'espèce, les poids 300 sont alignés, par trois, selon un plan transverse 12 qui est perpendiculaire à l'axe d'extension 103 de la lame 100. Ce plan transverse 12 est parallèle à un axe principal 11 de l'élément de construction 1, l'élément de construction 1 étendant sa plus grande dimension selon l'axe principal 11. En conséquent, le plan transverse 12 est parallèle au premier axe 40 de l'ossature 5. Les trois plans transverses 12 sont équidistants entre eux lorsqu'immédiatement adjacents. Ainsi, les absorbeurs de résonance 3 de la pluralité d'absorbeurs de résonance 3 sont répartis de façon régulière sur la face interne 13b de la deuxième paroi de construction 2b, aux intersections d'un quadrillage formé par les plans transverses 12 et les axes longitudinaux 103.

La paroi de construction 2a, 2b comprend la région périphérique 20 et la région centrale 21, schématiquement séparées par un cadre 15 en pointillés. La pluralité d'absorbeurs de résonance 3 est solidarisée avec la région centrale 21 de la paroi de construction 2a, 2b. La région périphérique 20 est périphérique à la région centrale 21. La région périphérique 20 est immédiatement adjacente aux premiers rails 4, au deuxième rail 6, ainsi qu'au rail inférieur 7, le deuxième rail 6 et le rail inférieur 7 étant non représentés.

Le support 200 comprend un premier moyen de fixation 201 et un deuxième moyen de fixation 202. Le premier moyen de fixation 201 et le deuxième moyen de fixation 202 participent à fixer l'absorbeur de résonance 3 à la deuxième paroi de construction 2b au niveau de la région centrale 21. Par ailleurs, le premier moyen de fixation 201 maintient la première extrémité 101 de la lame 100, et deuxième moyen de fixation 202 maintient la deuxième extrémité 102 de la lame 100.

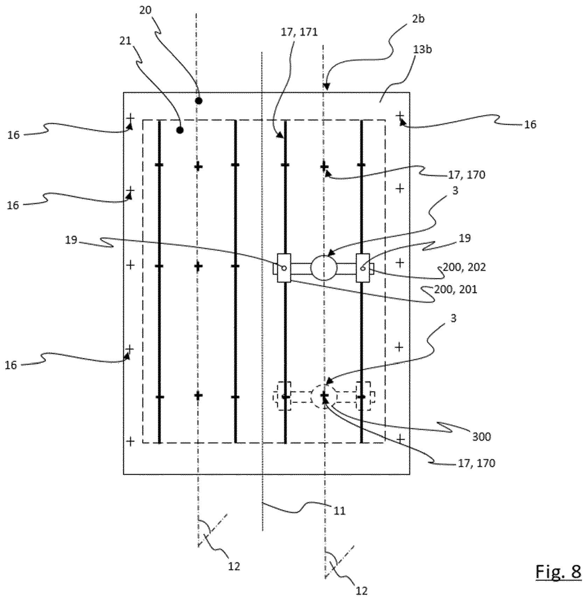

En se référant maintenant à la figure 8, on voit l'ensemble de construction dans un autre mode de réalisation. Seule la deuxième paroi de construction 2b est illustrée. La deuxième paroi de construction 2b est vue selon un angle orthogonal à sa face interne 13b. Seuls deux absorbeurs de résonance 3 sont représentés, dont l'un en pointillés pour faciliter la lecture de la figure 8. La description de la figure 7 s'applique néanmoins *mutatis mutandis* à la figure 8 et on pourra s'y reporter pour la compréhension et la mise en oeuvre de l'invention.

Les absorbeurs de résonance 3 illustrés aux figures 6 à 8 s'étendent horizontalement, ou sensiblement horizontalement, puisque leurs axes longitudinaux 103 sont horizontaux.

La figure 8 illustre la deuxième paroi de construction 2b qui comprend un premier marquage de position 16 et un deuxième marquage de position 17 distinct du premier marquage de position 16. Il est entendu que le premier marquage de position 16 et/ou le deuxième marquage de position 17 peuvent, tout en restant couverts par l'invention, être retrouvés sur la deuxième paroi de construction 2b et/ou la première paroi de construction 2a. En l'espèce dans le cas d'une double parois, le premier marquage de position 16 et le deuxième marquage de position 17 sont disposés sur la face interne 13b opposée à la face externe 14b de la paroi de construction concernée. Il est entendu que le premier marquage de position 16 et/ou le deuxième marquage de position 17 peuvent, tout en restant couverts par l'invention, être retrouvés sur la face interne 13a, 13b et/ou sur la face externe 14a, 14b. Selon une alternative, le premier marquage de position 16 et/ou le deuxième marquage de position 17 peuvent se retrouver sur l'une et/ou l'autre face.

Le premier marquage de position 16 indique une position d'un moyen de solidarisation 18, représenté en figure 7, reliant la paroi de construction 2a, 2b à l'ossature 5. Avantageusement dans le cas d'une double parois de construction 2a, 2b, le premier marquage de position 16 est disposé sur la face externe 14a, 14b, puisque le moyen de solidarisation reliant la paroi de construction 2a, 2b à l'ossature 5 est ajouté depuis la face externe 14a, 14b. En l'espèce, le premier marquage de position 16 est disposé sur la face interne 13a, 13b. Notamment, le premier marquage de position 16 est disposé dans la région périphérique 20. Il est représenté par une succession de croix fines, réparties en deux groupes, chaque groupe s'étendant parallèlement à l'axe principal 11 de sorte à coïncider avec les premiers rails 4 pour que le moyen de solidarisation 18 solidarise la paroi de construction 2a, 2b sur le premier rail 4.

Le deuxième marquage de position 17 permet de positionner l'absorbeur de résonance 3 sur la paroi de construction 2a, 2b. Avantageusement dans le cas d'une double parois de construction 2a, 2b, le deuxième marquage de position 17 est au moins disposé sur la face interne 13a, 13b, puisque l'absorbeur de résonance 3 est préférentiellement trouvé sur la face interne 13a, 13b. Notamment, il est disposé dans la région centrale 21. Dans l'exemple de la figure 8, le deuxième marquage de position 17 permet de positionner au moins le support 200 de l'absorbeur de résonance 3. En l'espèce, le deuxième marquage de position 17 permet de positionner au moins un dispositif de fixation 19 du support 200 de l'absorbeur de résonance 3 sur la paroi de construction. En l'espèce, le deuxième marquage de position 17 comprend des lignes barrées 171, parallèle au plan transverse 12, indiquant la position du support 200, et plus particulièrement indiquant la position du premier moyen de fixation 201 et du deuxième moyen de fixation 202, là où la ligne est barrée.

Dans l'exemple de la figure 8, le deuxième marquage de position 17 permet également de positionner le poids 300 de l'absorbeur de résonance 3. En l'espèce, le deuxième marquage de position 17 est constitué de croix 170 épaisses, situées dans le plan transverse 12, destinées à coïncider avec un centre du poids 300 de l'absorbeur de résonance 3.

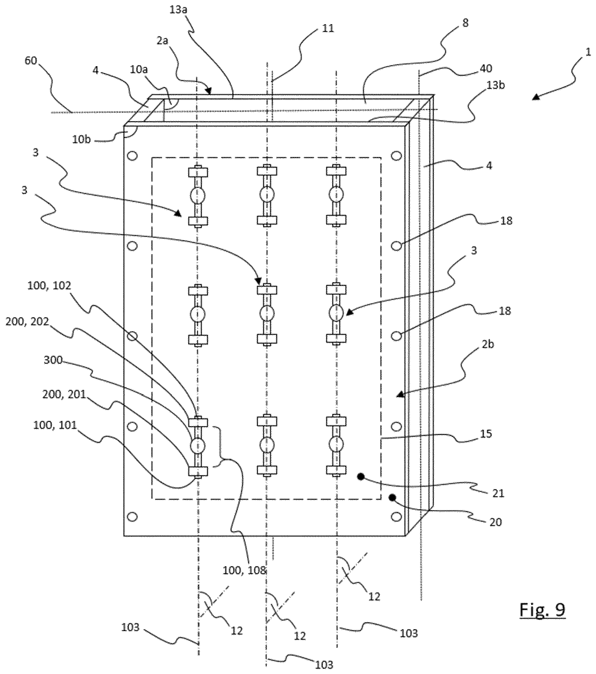

La figure 9 illustre un autre mode de réalisation de l'invention dans lequel tous les axes longitudinaux 103 des lames 100 sont verticaux. De façon particulière, tous les axes longitudinaux 103 des lames 100 sont également parallèles au premier axe 40 de l'ossature 5. Les axes longitudinaux 103 des lames 100 sont parallèles à l'axe principal 11 de l'élément de construction 1. Les axes longitudinaux 103 des lames 100 s'inscrivent dans les plans transverses 12. Outre ces différences, la description de la figure 7 s'applique *mutatis mutandis* à la figure 9 et on pourra s'y reporter pour la compréhension et la mise en oeuvre de l'invention.

Dans l'exemple illustré à la figure 9, les absorbeurs de résonance 3 de la pluralité d'absorbeurs de résonance 3 sont répartis de façon régulière le long de lignes formées par l'intersection entre les plans transverses 12 équidistants les uns par rapport aux autres et la face interne 13a, 13b de la paroi de construction qui porte les absorbeurs de résonance 3.

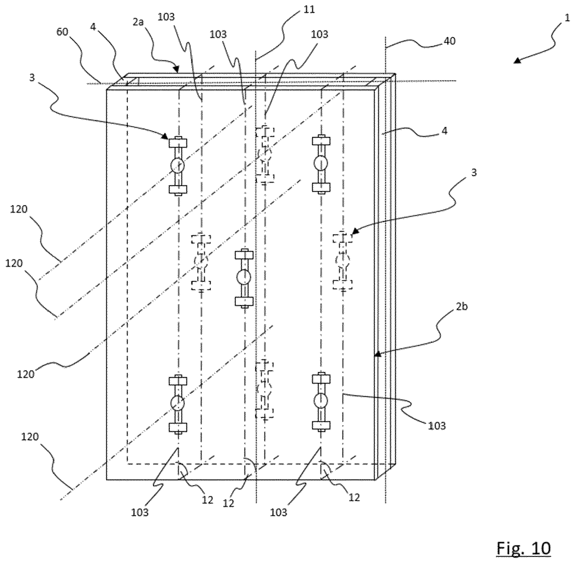

Les absorbeurs de résonance 3 illustrés aux figures 9 et 10 s'étendent verticalement, ou sensiblement verticalement, puisque leurs axes longitudinaux 103 sont verticaux.

La figure 10 illustre deux modes de réalisation de l'invention pouvant être mis en oeuvre indépendamment ou conjointement, avec une disposition de la pluralité d'absorbeurs de résonance 3 différente de ce qui a été précédemment décrit. Outre cette différence, la description de la figure 7 s'applique *mutatis mutandis* à la figure 10 et on pourra s'y reporter pour la compréhension et la mise en oeuvre de l'invention.

D'une part, on considère la disposition relative des absorbeurs de résonance 3 disposés sur une même plaque. D'autre part, on considère la disposition relative des absorbeurs de résonance 3 disposés sur l'une et l'autre plaque.

Dans cet exemple de réalisation, la pluralité d'absorbeurs de résonance 3 a des absorbeurs de résonance 3 répartis en quinconce sur une unique paroi de construction 2a, 2b. En l'espèce, une partie des absorbeurs de résonance 3 de la pluralité d'absorbeurs de résonance 3 sont répartis en quinconce sur la première paroi de construction 2a. L'autre partie des absorbeurs de résonance 3 de la pluralité d'absorbeurs de résonance 3 sont répartis en quinconce sur la deuxième paroi de construction 2b. Les axes longitudinaux 103 des lames 100 sont compris dans l'un des plans transverses 12.

Au moins trois absorbeurs de résonance 3 de la pluralité d'absorbeurs de résonance 3 sont répartis alternativement sur la première paroi de construction 2a et la deuxième paroi de construction 2b. Par alternatif, on entend que les absorbeurs de résonance 3 ne sont pas disposés en vis-à-vis les uns des autres. Dans la figure 10, toute la pluralité d'absorbeurs de résonance 3 est répartie alternativement sur la première paroi de construction 2a et sur la deuxième paroi de construction 2b. En ce sens, la répartition de la pluralité d'absorbeurs de résonance 3 dans l'élément de construction 1 est tridimensionnelle. Ainsi, un seul absorbeur de résonance 3 est présent à l'intersection d'une droite transverse 120 comprise dans le plan transverse 12, cette droite transverse 120 étant perpendiculaire à l'axe principal 11 de l'élément de construction 1. Seules certaines droites transverses 120 sont représentées afin de faciliter la lecture de la figure 10. Une telle disposition évite toute interférence mécanique ou d'absorption entre deux absorbeurs de résonance 3 qui serait disposés strictement l'un en face de l'autre.

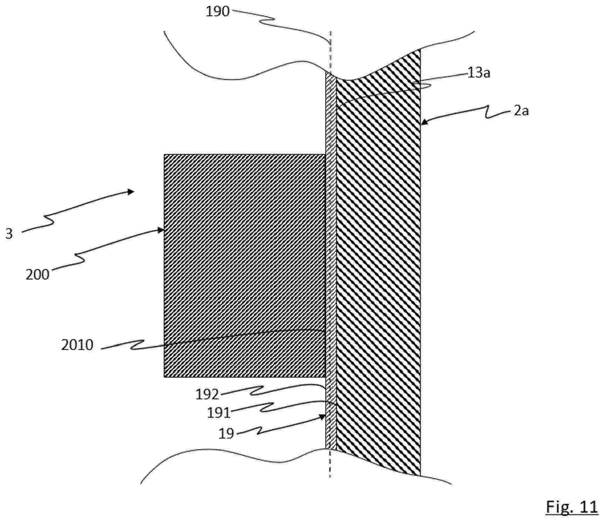

La figure 11 illustre la fixation de l'absorbeur de résonance 3 sur la face interne 13a de la paroi de construction 2a. La figure 11 est une vue rapprochée selon une coupe perpendiculaire à la première paroi de construction 2a passant par un axe d'allongement 190 du dispositif de fixation 19. L'élément d'isolation acoustique 9 n'est pas représenté, et l'absorbeur de résonance 3, vu au niveau de son support 200, est schématisé par un rectangle.

La figure 11 montre un dispositif de fixation 19 qui fixe le support 200 de l'absorbeur de résonance 3 à la première paroi de construction 2a.

Le dispositif de fixation 19 s'étend selon l'axe d'allongement 190 parallèle à l'axe principal 11 de l'élément de construction 1. En l'espèce, le dispositif de fixation 19 comprend un matériau adhérant qui est une bande collante comprenant un matériau collant. Le dispositif de fixation 19 en forme de bande collante comprend une première surface 191 et une deuxième surface 192, collantes. La première surface 191 adhère à la première paroi de construction 2a et la deuxième surface 192 adhère au support 200, de sorte à ce que le support 200 soit fixé à la première paroi de construction 2a.

Le support 200 comprenant une surface de fixation 2010. La deuxième surface 192 et la surface de fixation 2010 sont en contact. Ainsi, la surface de fixation 2010 est fixée à la première paroi de construction 2a par le dispositif de fixation 19.

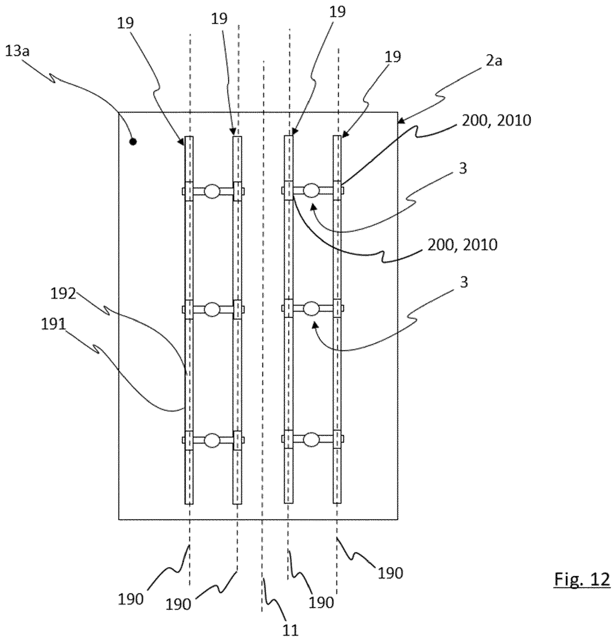

La figure 12 illustre la première paroi de construction 2a, vue du côté de sa face interne 13a. Des absorbeurs de résonance 3, six absorbeurs de résonance 3 dans cet exemple, sont fixés horizontalement à la face interne 13a de la première paroi de construction 2a. Un même dispositif de fixation 19 fixe une pluralité d'absorbeurs de résonance 3 et un même absorbeur de résonance 3 est fixé par deux dispositifs de fixation 19. La description de la figure 11 s'applique *mutatis mutandis* à la figure 12 et l'on pourra s'y reporter pour la compréhension et la réalisation de l'invention.

Dans ce mode de réalisation, deux dispositifs de fixation 19 fixent l'absorbeur de résonance 3. Le support 200 comprend deux surfaces de fixation 2010, non visibles du fait de l'angle de vue mais situé sur le support 200 en vis-à-vis de l'un et l'autre des dispositifs de fixation 19. Deux dispositifs de fixation 19 coopèrent avec l'une et l'autre des surfaces de fixation 2010. Toute l'étendue de la surface de fixation 2010 est au contact du dispositif de fixation 19.

Comme un même dispositif de fixation 19 fixe une pluralité d'absorbeurs de résonance 3, et que les absorbeurs de résonance 3 sont distants les uns des autres, une partie du dispositif de fixation 19, du côté de sa deuxième surface 192, est dissociée de l'absorbeur de résonance 3. Par exemple, la deuxième surface 192 du dispositif de fixation 19 colle l'élément d'isolation 9, non représenté. La première surface 191 du dispositif de fixation 19 est totalement au contact de la face interne 13a de la première paroi de construction 2a.

Les absorbeurs de résonance 3 de la pluralité d'absorbeurs de résonance 3 ont leurs surfaces de fixation 2010 alignées selon l'axe d'allongement 190 du dispositif de fixation 19. Les axes d'extension 190 des différents dispositifs de fixation 19 sont tous parallèles entre eux et parallèle à l'axe principal 11 de l'élément de construction 1, de sorte à ce que les absorbeurs de résonance 3 aient une disposition régulière sur la première paroi de construction 2a.

On comprend à la lecture de ce qui précède que la présente invention propose un ensemble de construction configuré pour obtenir une bonne isolation acoustique tout en maitrisant les coûts associés à l'utilisation d'absorbeurs de résonance. Cet ensemble de construction optimise le nombre d'absorbeurs de résonance fixés à la paroi de construction de l'ensemble de construction tout en garantissant l'efficacité d'absorption des vibrations à basse fréquence.

L'invention, en particulier, la forme de l'absorbeur de résonance peut être modifiée sans nuire à l'invention, dans la mesure où l'absorbeur de résonance, *in fine*, remplit les mêmes fonctionnalités que celles décrites dans ce document. L'invention est définie exclusivement par les revendications annexées.

## Revendications

1. Elément de construction (1) comprenant au moins une paroi de construction (2a, 2b) et une pluralité d'absorbeurs de résonance (3) comprenant chacun au moins une lame (100), un support (200) et un poids (300), la lame (100) incluant une portion intermédiaire (108) apte à osciller autour d'une position d'équilibre, le support (200) étant configuré pour maintenir la lame (100) et le support (200) est solidarisé sur la paroi de construction (2a, 2b), le poids (300) étant porté par la portion intermédiaire de la lame (100), **caractérisé en ce qu'**une masse de la pluralité d'absorbeurs de résonance (3) représente 2 à 25% d'une masse totale de l'élément de construction (1).

2. Elément de construction selon la revendication 1, dans lequel la masse de la pluralité d'absorbeurs de résonance (3) représente 5 à 15% de la masse totale de l'élément de construction (1).

3. Elément de construction selon l'une quelconque des revendications précédentes, dans lequel l'élément de construction (1) comprend deux parois de construction (2a, 2b) parallèles l'une à l'autre et séparées par un espace intermédiaire (8), la pluralité d'absorbeurs de résonance (3) étant située dans l'espace intermédiaire (8).

4. Elément de construction selon la revendication précédente, dans lequel chacune des deux parois de construction (2a, 2b) comprend une face interne (13a, 13b) opposée à une face externe (14a, 14b), la face interne (13a, 13b) des deux parois de constructions (2a, 2b) étant orientée vers l'espace intermédiaire (8), la pluralité d'absorbeurs de résonance (3) étant fixée à la face interne (13a, 13b) de l'une et/ou l'autre des parois de construction (2a, 2b).

5. Elément de construction selon la revendication précédente, dans lequel les absorbeurs de résonance (3) de la pluralité d'absorbeurs de résonance (3) sont répartis de façon régulière sur l'une et/ou l'autre face interne (13a, 13b) de l'une et/ou l'autre des parois de construction (2a, 2b).

6. Elément de construction selon l'une quelconque des revendications précédentes, dans lequel la paroi de construction (2a, 2b) comprend une région périphérique (20) et une région centrale (21), la pluralité d'absorbeurs de résonance (3) étant solidarisée avec la région centrale (21) de la paroi de construction (2a, 2b).

7. Elément de construction selon l'une quelconque des revendications précédentes, dans lequel au moins un absorbeur de résonance (3) de la pluralité d'absorbeurs de résonance (3) étendant sa lame (100) horizontalement ou verticalement.

8. Elément de construction selon l'une quelconque des revendications précédentes, dans lequel au moins une partie des absorbeurs de résonance (3) de la pluralité d'absorbeurs de résonance (3) sont répartis en quinconce sur la même paroi de construction (2a, 2b).

9. Elément de construction selon l'une quelconque des revendications 4 à 8 en combinaison avec la revendication 3, comprenant une première paroi de construction (2a) et une deuxième paroi de construction (2b), au moins trois absorbeurs de résonance (3) de la pluralité d'absorbeurs de résonance (3) sont répartis alternativement sur la première paroi de construction (2a) et la deuxième paroi de construction (2b).

10. Elément de construction selon l'une quelconque des revendications précédentes, dans lequel au moins une partie des absorbeurs de résonance (3) de la pluralité d'absorbeurs de résonance (3) est répartie de façon régulière le long de lignes formées par l'intersection entre des plans transverses (12) équidistants les uns par rapport aux autres et l'une et/ou l'autre face interne (13a, 13b) de l'une et/ou l'autre des parois de construction (2a, 2b).

11. Elément de construction selon l'une quelconque des revendications précédentes, dans lequel la paroi de construction (2a, 2b) comprend un premier marquage de position (16) pour indiquer une position d'un moyen de solidarisation reliant la paroi de construction (2a, 2b) à une ossature (5) et un deuxième marquage de position (17) distinct du premier marquage de position (16), le deuxième marquage de position (17) permettant de positionner l'absorbeur de résonance (3) sur la paroi de construction (2a, 2b).

12. Elément de construction selon la revendication précédente, dans lequel le deuxième marquage de position (17) permet de positionner au moins le support (200) de l'absorbeur de résonance (3).

13. Elément de construction selon l'une quelconque des revendications 11 à 12, dans lequel le deuxième marquage de position (17) permet de positionner au moins un dispositif de fixation du support (200) de l'absorbeur de résonance (3).

14. Elément de construction l'une quelconque des revendications 11 à 13, dans lequel le deuxième marquage de position (17) permet de positionner au moins le poids (300) de l'absorbeur de résonance (3).

## Patentansprüche

1. Bauelement (1) umfassend wenigstens eine Bauwand (2a, 2b) und eine Mehrzahl von Resonanzabsorbern (3), die jeweils wenigstens eine Leiste (100), einen Träger (200) und ein Gewicht (300) umfassen, wobei die Leiste (100) einen Zwischenabschnitt (108) aufweist, der dafür geeignet ist, um eine Gleichgewichtsposition herum zu schwingen, wobei der Träger (200) dazu ausgebildet ist, die Leiste (100) zu halten, und der Träger (200) fest an der Bauwand (2a, 2b) angebracht ist, wobei das Gewicht (300) vom Zwischenabschnitt der Leiste (100) getragen wird, **dadurch gekennzeichnet, dass** eine Masse der Mehrzahl von Resonanzabsorbern (3) 2 bis 25 % einer Gesamtmasse des Bauelements (1) repräsentiert.

2. Bauelement nach Anspruch 1, wobei die Masse der Mehrzahl von Resonanzabsorbern (3) 5 bis 15 % der Gesamtmasse des Bauelements (1) repräsentiert.

3. Bauelement nach einem der vorhergehenden Ansprüche, wobei das Bauelement (1) zwei Bauwände (2a, 2b) umfasst, die parallel zueinander verlaufen und durch einen Zwischenraum (8) getrennt sind, wobei sich die Mehrzahl von Resonanzabsorbern (3) in dem Zwischenraum (8) befindet.

4. Bauelement nach dem vorhergehenden Anspruch, wobei jede der zwei Bauwände (2a, 2b) eine Innenseite (13a, 13b) umfasst, die einer Außenseite (14a, 14b) gegenüberliegt, wobei die Innenseite (13a, 13b) der zwei Bauwände (2a, 2b) zu dem Zwischenraum (8) orientiert ist, wobei die Mehrzahl von Resonanzabsorbern (3) an der Innenseite (13a, 13b) der einen und/oder anderen der Bauwände (2a, 2b) befestigt ist.

5. Bauelement nach dem vorhergehenden Anspruch, wobei die Resonanzabsorber (3) der Mehrzahl von Resonanzabsorbern (3) gleichmäßig auf der einen und/oder der anderen Innenseite (13a, 13b) der einen und/oder anderen der Bauwände (2a, 2b) verteilt sind.

6. Bauelement nach einem der vorhergehenden Ansprüche, wobei die Bauwand (2a, 2b) einen Randbereich (20) und einen Mittelbereich (21) umfasst, wobei die Mehrzahl von Resonanzabsorbern (3) fest mit dem Mittelbereich (21) der Bauwand (2a, 2b) verbunden ist.

7. Bauelement nach einem der vorhergehenden Ansprüche, wobei wenigstens ein Resonanzabsorber (3) der Mehrzahl von Resonanzabsorbern (3) seine Leiste (100) horizontal oder vertikal erstreckt.

8. Bauelement nach einem der vorhergehenden Ansprüche, wobei wenigstens ein Anteil der Resonanzabsorber (3) der Mehrzahl von Resonanzabsorbern (3) auf derselben Bauwand (2a, 2b) versetzt verteilt sind.

9. Bauelement nach einem der Ansprüche 4 bis 8 in Kombination mit Anspruch 3, umfassend eine erste Bauwand (2a) und eine zweite Bauwand (2b), wobei wenigstens drei Resonanzabsorber (3) der Mehrzahl von Resonanzabsorbern (3) abwechselnd auf der ersten Bauwand (2a) und der zweiten Bauwand (2b) verteilt sind.

10. Bauelement nach einem der vorhergehenden Ansprüche, wobei wenigstens ein Anteil der Resonanzabsorber (3) der Mehrzahl von Resonanzabsorbern (3) gleichmäßig entlang von Linien verteilt ist, die von der Schnittlinie zwischen Querebenen (12), die in gleichem Abstand zueinander angeordnet sind, und der einen und/oder anderen Innenseite (13a, 13b) der einen und/oder anderen der Bauwände (2a, 2b) gebildet sind.

11. Bauelement nach einem der vorhergehenden Ansprüche, wobei die Bauwand (2a, 2b) eine erste Positionsmarkierung (16) zur Anzeige einer Position eines Befestigungsmittels, das die Bauwand (2a, 2b) mit einem Gerüst (5) verbindet, und eine zweite Positionsmarkierung (17) umfasst, die sich von der ersten Positionsmarkierung (16) unterscheidet, wobei es die zweite Positionsmarkierung (17) ermöglicht, den Resonanzabsorber (3) auf der Bauwand (2a, 2b) zu positionieren.

12. Bauelement nach dem vorhergehenden Anspruch, wobei es die zweite Positionsmarkierung (17) ermöglicht, wenigstens den Träger (200) des Resonanzabsorbers (3) zu positionieren.

13. Bauelement nach einem der Ansprüche 11 bis 12, wobei es die zweite Positionsmarkierung (17) ermöglicht, wenigstens eine Vorrichtung zur Befestigung des Trägers (200) des Resonanzabsorbers (3) zu positionieren.

14. Bauelement nach einem der Ansprüche 11 bis 13, wobei es die zweite Positionsmarkierung (17) ermöglicht, wenigstens das Gewicht (300) des Resonanzabsorbers (3) zu positionieren.

## Claims

1. Building element (1) comprising at least one construction wall (2a, 2b) and a plurality of resonance absorbers (3) each comprising at least one blade (100), a support (200) and a weight (300), the blade (100) including an intermediate portion (108) capable of oscillating around an equilibrium position, the support (200) being configured to hold the blade (100) and the support (200) is secured to the construction wall (2a, 2b), the weight (300) being carried by the intermediate portion of the blade (100), **characterized in that** a mass of the plurality of resonance absorbers (3) represents 2 to 25% of a total mass of the building element (1).

2. Building element according to claim 1, in which the mass of the plurality of resonance absorbers (3) represents 5 to 15% of the total mass of the building element (1).

3. Building element according to any one of the preceding claims, in which the building element (1) comprises two construction walls (2a, 2b) parallel to each other and separated by an intermediate space (8), the plurality of resonance absorbers (3) being located in the intermediate space (8).

4. Building element according to the preceding claim, in which each of the two construction walls (2a, 2b) comprises an internal face (13a, 13b) opposite an external face (14a, 14b), the internal face (13a, 13b) of the two construction walls (2a, 2b) being oriented towards the intermediate space (8), the plurality of resonance absorbers (3) being fixed to the internal face (13a, 13b) of one and/or the another of the construction walls (2a, 2b).

5. Building element according to the preceding claim, in which the resonance absorbers (3) of the plurality of resonance absorbers (3) are evenly distributed on one and/or the other internal face (13a, 13b) one and/or the other of the construction walls (2a, 2b).

6. Building element according to any one of the preceding claims, in which the construction wall (2a, 2b) comprises a peripheral region (20) and a central region (21), the plurality of resonance absorbers (3) being secured to the central region (21) of the construction wall (2a, 2b).

7. Building element according to any preceding claim, wherein at least one resonance absorber (3) of the plurality of resonance absorbers (3) extending its blade (100) horizontally or vertically.

8. Building element according to any one of the preceding claims, in which at least some of the resonance absorbers (3) of the plurality of resonance absorbers (3) are staggered on the same construction wall (2a, 2b).

9. Building element according to any claims 4 to 8 in combination with claim 3, comprising a first construction wall (2a) and a second construction wall (2b), at least three resonance absorbers (3) of the plurality of resonance absorbers (3) are distributed alternately on the first construction wall (2a) and the second construction wall (2b).

10. Building element according to any one of the preceding claims, in which at least a part of the resonance absorbers (3) of the plurality of resonance absorbers (3) is evenly distributed along lines formed by the intersection between transverse planes (12) equidistant from each other and one and/or the other internal face (13a, 13b) of one and/or the other of the construction walls (2a, 2b).

11. Building element according to any one of the preceding claims, in which the construction wall (2a, 2b) comprises a first position marking (16) to indicate a position of a securing means connecting the construction wall (2a, 2b) to a framework (5) and a second position marking (17) distinct from the first position marking (16), the second position marking (17) making it possible to position the resonance absorber (3) on the construction wall (2a, 2b).

12. Building element according to the preceding claim, in which the second position marking (17) makes it possible to position at least the support (200) of the resonance absorber (3).

13. Building element according to any one of claims 11 to 12, in which the second position marking (17) makes it possible to position at least one device for attaching the support (200) of the resonance absorber (3).

14. Building element according to any one of claims 11 to 13, in which the second position marking (17) makes it possible to position at least the weight (300) of the resonance absorber (3).
